# EUROPEAN PATENT SPECIFICATION

(11) **EP 1 136 961 B1**
(45) Date of publication and mention of the grant of the patent: **25.02.2004**
(21) Application number: 00202720.9
(22) Date of filing: 31.07.2000
(51) Int. Cl.: G07F 7/10, G07F 19/00

(54) **System and process for remote payments and transactions in real time by mobile telephone**
System und Verfahren für Fernbezahlungen und Transaktionen in Echtzeit mit Hilfe eines Mobiltelefons
Système et procédé pour effectuer des paiements à distance ou des transactions en temps réel à l'aide d'un téléphone mobile

(30) Priority: 24.03.2000 ES 200000724; 23.06.2000 ES 200001573; 23.06.2000 ES 200001574
(43) Date of publication of application: 26.09.2001
(73) Proprietor: Mobipay International, S.A., 28001 Madrid (ES)
(72) Inventor: Calvo Pesquera, Alicia Lucia, 28220 Majadahonda, Madrid (ES); Vacas Cid, José Luis, 28806 Alcala de Henares, Madrid (ES); De Casso Basterrechea, Pablo, 28020 Madrid (ES); Moreno Camacho, Jorge Miguel, 28224 Pozuelo, Madrid (ES); Martinez Hernandez, Pedro, 48005 Bilbao (Vizcaya) (ES); Gomez-Acebo Dennes, Gonzalo, 28034 Madrid (ES); De La Cruz Vega, José Manuel, 48005 Bilbao (Vizcaya) (ES); Diaz Martin, Javier, 48005 Bilbao (Vizcaya) (ES); Cantero Brandes, Mario, 48005 Bilbao (Vizcaya) (ES); Clemente Simon, Ivan, 48005 Bilbao (Vizcaya) (ES)
(74) Representative: Ungria Lopez, Javier

(56) References cited:
- EP-A- 0 986 275
- WO-A-97/41499
- WO-A-98/47116
- WO-A-99/22346
- WO-A-99/33034
- "DIALOG. SUN-SENTINEL" DIALOG. SUN-SENTINEL, XP002932299

## Description

### TECHNICAL FIELD OF THE INVENTION

The present invention is applicable to the industrial field of electronic transactions related to businesses and means of payment and in the field of mobile telephones.

### BACKGROUND OF THE INVENTION

In prior art there is known the use of payment processes and systems by means of a mobile telephone which are based on the use of a point of sale terminal, to which a mobile telephone is added in order to carry out the transactions.

In this sense, European patent application EP-A-0940783 or U.S. Patent US-A-5754655 can be cited.

Furthermore, systems are known in which a mobile telephone does not form part only of a point of sale terminal, but also payment is made by means of a mobile telephone, for which purpose the mobile telephone has to be modified so that safe transactions can be carried out. In this sense we can cite European patent application EP-A-0785534.

Other systems are based on transmitting the number of the payer's bank account to a payment collector by means of a connection from the collector's mobile telephone to a bank, such as the case of patent application WO-A-96/13814 or patent application WO-A-97/45814.

These systems have the inconvenience that the user must inform a person that he might not know, on his bank account number, which represents a very high risk.

French patent application FR-A-2779896 which describes a process wherein payment is carried out by means of the identification of the buyer should also be pointed out which process consists of ensuring that said buyer is a subscriber normally subscribed to a list of subscribers of the communication network.

This process has the inconvenience that the confirmation of the transaction is first made from the payment server to the businesses server and then from the store's server to the buyer, whereby the payment server cannot certify that the confirmation of the transaction has been transmitted to the buyer. Furthermore after the buyer decides to make a purchase, communications can only be held between the server of the means of payment and the store's server, which implies that the buyer and the seller are customers of the server of the means of payment so that this latter server can compensate his account.

Another document is European patent application EP-A-0986275 that refers to a method to carry out a transaction between a buyer, who has a mobile telephone, and a seller, both being subscribed to a validation platform. In order to carry out the transaction, a contact is established between the buyer and the seller, and a purchase agreement is reached; then, the buyer transmits a confirmation message that includes the buyer's identification. A copy of the purchase confirmation is transmitted, automatically, to the validation platform, from the buyer or from the seller.

Mention can also be made of PCT application WO-A-98/54678 which refers to a system in order to activate a petrol pump by means of a mobile telephone. In order to fill up the tank, the buyer makes a telephone call from his mobile telephone to a unit, and introduces a first secret code. The unit verifies the buyer's telephone number and the first secret code, it verifies that the code corresponds to the telephone number and it verifies whether the buyer thus verified is on a "black list". If the verified buyer is not on the "black list", he is granted access to the system and the buyer can enter the code identifying a specific petrol pump in question and can fill up the tank.

European patent application EP-A-0950968 describes an electronic trading system that includes a mobile terminal which can be provided with means for carrying out a wide range of operations (payment card, telephone card, electronic ticket for shows, etc.)

PCT application WO-A-98/47116 that refers to a payment system using a mobile telephone can also be cited. In this case the payer transmits information that identifies him/her, and information regarding the amount of the transaction and an identifier of the seller, to the transaction center.

The abstract of the publication of Japanese application JP-A-08/249530 that describes a way of operating a vending machine by means of a mobile telephone can also be cited. An alternative way is disclosed in the PCT Application WO-A-9 922 346.

French patent application FR-A-2780800 refers to a mobile telephone payment system that includes the transmission of data that identify a seller from a payer's mobile telephone.

German patent application DE-A-19806557 describes a system for indicating expenses.

PCT application WO-A-98/06214 refers to a system for alerting the holder of a credit card, payment card, mobile telephone or the like, about fraudulent use thereof. For example, when an attempt is made to carry out a transaction using a credit card in a terminal of a point of sale, the system detects that an attempt to use the credit card is being made and a warning is sent to a telecommunications device, such as a mobile telephone, of the holder of the card, so that the holder thereof can authorize or refuse the transaction, or simply so that the holder thereof may be informed about the transactions carried out.

None of the cited documents permits selection of a specifically suitable communication equipment, by selecting the suitable communication channel depending on the user's type of mobile telephone, in such a way that payment can be made by a plurality of types of mobile telephones, without changing the structure or parts thereof.

On the other hand, none of the cited documents consider the possibility of carrying out the certification of the purchase of Intellectual Property, nor the inclusion of an electronic delivery note.

### OBJECT OF THE INVENTION

The invention in question has the purpose of solving the inconveniences of prior art by means of a system and a process, which allows the use of any mobile telephone as a means of payment: purchases in person, i.e. when the user goes directly to the store; purchases by Internet of goods as well as of Intellectual Property, for example information, music or video games; purchases from vending machines; purchases and reservations in advance; purchases by catalogue; purchases in response to any type of commercials or advertisements, such as for example, television commercials or written advertisements; pay per view; and to allow transactions between users, and all of this irrespective of the type of mobile telephone that the users have. Due to the design of the system, it is applicable for any other type of purchase. Transactions are carried out in real time.

The invention permits payment to be made from any type of digital mobile telephone, hereinafter referred to as "mobile telephone", without the mobile telephone having to be modified which permits any user who has a mobile telephone to hire the group of payment functions and services; and all of this without the use of credit cards, and without the need of the user having to be necessarily a client of a bank. For this purpose a transaction and payment center is provided for and this center is provided with the different mobile communication capacities with the corresponding equipment and means for identifying from what type of mobile telephone payment is being requested or made, and thus allow the transaction and payment center to make the communication with any mobile telephone by means of the corresponding mobile telephone equipment.

It should be emphasized that the invention also permits a purchase receipt to be obtained, even in the case of the purchase of Intellectual Property by Internet. Furthermore, confirmation of delivery of previously purchased goods, certifying the delivery without the need of the seller to hand over a delivery note is achieved by means of the invention.

The invention may be implemented in all countries having a mobile telephony network, and especially in those countries where a nationwide management company has been established. This company will agree with the country's mobile telephone operators on the conditions of providing and operating the service, and payment will be carried out by means of any type of mobile telephone without the need of making variations thereof.

### DESCRIPTION OF THE INVENTION

To achieve the aforementioned objects, the invention provides a system for processing payments and transactions between payers and payees being associated to the system, using at least one communication by digital mobile telephony, the system comprising:
- a first server interconnected with telecommunication means with first data storage means and including account management means that process first data of an account of each associated payer and second data of an account of each associated payee;
   wherein
- the first telecommunication means selectively communicate the first server with a digital mobile telephone unit identified by an admissible telephone number of an associated payer and with a telecommunication terminal identified by an admissible identification code of an associated payee; the telecommunication means comprising a plurality of telecommunication equipments;
- the first data storage means contain first information on each associated payer, said first information comprising at least the admissible telephone number, at least a pre-established authorization criterion for authorizing at least one transaction that requires a payment from the associated payer's account and at least a safety criterion associated univocally to the associated payer's telephone number, as well as some second information on each associated payee that comprises at least the admissible identification code;
the first server comprising
- first verifying means for verifying in the data storage means whether a first message received through the telecommunication means contains an admissible telephone number of an associated payer and an admissible identification code of an associated payee, said first verifying means generating a first acceptance message when they detect an admissible identification code and an admissible telephone number;
- second verifying means for verifying in the data storage means whether a transaction authorization request received through the telecommunication means in addition to the admissible telephone number detected by the first verifying means, satisfies said pre-established authorization criterion, said second verifying means generating a second acceptance message when the authorization request satisfies said authorization criterion;
- third verifying means for verifying in the first data storage means whether a safety parameter received through the telecommunication means satisfies the safety criterion associated to the admissible telephone number detected by the first verifying means, said third verifying means generating a third acceptance message when they detect that the safety parameter satisfies the safety criterion associated to the admissible telephone number;
- authorization means for authorizing the account management means on the basis of the authorization request, to process a debit in the associated payer's account and to process a corresponding credit in the associated payee's account as long as the first, second and third acceptance messages have been generated;
- rejection message generating means for generating a rejection message when at least one of the acceptance messages has not been generated, and for transmitting the rejection message to the telecommunication means;
- confirmation message generating means for generating at least a confirmation message when at least one of the acceptance messages has been generated, and for transmitting said confirmation message to the telecommunication means, and for selective transmission of the confirmation message to the mobile telephone identified by the admissible telephone number in said first message, and to the telecommunication terminal identified by the admissible identification code;
- second data storage means that contain at least first information referring to the admissible telephone number of each payer, and at least second information referring to the type of digital mobile telephone belonging to each telephone number;
- selecting means for verifying in said second data storage means, the second information corresponding to the digital mobile telephone unit identified by the admissible telephone number and for selecting one of the telecommunication equipments that communicates with a digital mobile telephone identified by the admissible telephone number by means of a telecommunication service being compatible with the type of digital mobile telephone identified in said second information.

In an embodiment of the invention, each second information contained in the second data storage means and referring to the type of digital mobile telephone corresponding to each admissible telephone number of each associated payer and each admissible identification code of each payee when the latter is a number of a digital mobile telephone, is a first identifying code being representative of the International Mobile Equipment Identifier (IMEI).

The incorporation of the IMEI codes on the basis of which, according to this embodiment, the types of mobile telephones corresponding to each of the admissible telephone numbers are identified, may be made by loading data from a source being alien to the system or, alternatively or complementarily, by inquiry and updating means being present in the system. This, the first server may comprise first inquiry means for inquiring in at least one Visitor Location Register (VLR) comprising a first register relating telephone numbers with an IMEI code, the IMEI code corresponding to each of the admissible telephone numbers, and updating means for updating said second information in the second data storage means by comparing each IMEI code inquired by the first inquiry means with each code being representative of the IMEI code associated to each admissible telephone number as contained in the second data storage means.

Alternatively or complementarily, the first inquiry means may also extract the IMEI codes associated to each admissible telephone number,
* from an Equipment Identifier Register (EIR) that contains an association between each admissible telephone number and the IMEI code corresponding to each admissible telephone number, and which receive said association from each Visitor Location Register as updated by said Visitor Location Register;
* from an Unstructured Supplementary Service Data (USSD) frame into which each Visitor Location Register associated to each Mobile Switching Center (MSC) which has issued said frame, has inserted the IMEI code associated to the admissible telephone number corresponding to the user who has originated said frame;
* through an interface between the Visitor Location Register and said inquiry means;
   and/or
* by third inquiry means for inquiring in a data bank of a mobile telephony network operator, registers that each Mobile Switching Center (MSC) transfers immediately each time a USSD frame or a voice call is addressed to a specific telephone number, said registers containing a relation of each telephone number from which a call was made or originated the USSD frame with an IMEI code of the terminal from which said call or frame originated, in respect of the IMEI codes corresponding to each admissible telephone number, and by third updating means for updating said second information in said second data storage means on the basis of a comparison of each inquired IMEI code inquired by the third inquiry means with each code being representative of the IMEI code associated to each admissible telephone number contained in the second data storage means.

Also alternatively or complementarily, the first server may comprise second inquiry means for inquiring the IMEI code corresponding to each admissible telephone number, in Call Data Registers (CDR) of a data bank of a mobile telephony network operator, that contain a relation of each telephone number which, on the grounds of a call, has originated a Call Data Register with an IMEI code of the terminal from which said call originated, and by second updating means for updating said second information in the second data storage means on he basis of a comparison of each IMEI code inquired by the second inquiry means with each code being representative of the IMEI code associated to each admissible telephone number, contained in the second data storage means.

On the other hand, the information on the type of mobile telephone corresponding to each admissible telephone number stored in the second data storage means, may also be complemented with other data, as for example, at least one datum being indicative of a communication capacity selected from a capacity of managing sessions according to Wireless Application Protocols (WAP), a capacity of managing sessions of Unstructured Supplementary Service Data (USSD), and combinations thereof, of each digital mobile telephone identified by an IMEI code and associated to an admissible telephone number.

The presence of the second data storage means has the advantage that the system, on the basis of comprising information o the types of mobile telephones of the associated payers and, in some cases, of associated payees, is capable of selecting the communication channel being the most efficient and quick one for communicating with a payer, this being especially important when the first message, i.e. the first communication regarding a transaction, has not been established from the mobile telephone of an associated payer, because thus a fast and efficient communication may be established without the mobile telephones of the users needing to be modified.

The admissible identification code of each payee may be selected among a telephone number, a number related to a telephone number, an Internet code, a code representative of an Internet code, an e-mail address, and a code based on an e-mail address. The admissible identification code of a payee may also be that of a digital mobile telephone the admissible telephone number and type of which are comprised in the second data storage means. In this latter case, the first server further comprises complementary verifying means being associated to the selecting means, for verifying if the admissible identification code that has been verified by the first verifying means in said first message received from a payer identified by a first admissible telephone number and containing a transaction request that has been verified by the second verifying means, corresponds to a second admissible telephone number from among the admissible telephone numbers of a digital mobile telephone comprised within the first information contained in the first data storage means. Thus, when said verifying means detect that the first message identifies the second admissible telephone number as identification of a payee, the complementary verifying means generate a fourth acceptance message being processable by the confirmation message generating means. On the other hand, the rejection message generating means generate a rejection message when the fourth message has not been generated.

Also, the admissible telephone numbers of each or of at least a part of the payers, may be contained in the first and/or second data storage means as such and/or in the form of a code being representative of said numbers, such as for example as MSISDN associated to an admissible telephone number, such the first verifying means verify the payer's admissible telephone number from said code representative of said admissible telephone number and contained in the first data storage means, as received through the telecommunication means. In accordance with the invention, the second acceptance message may be designed such that emission thereof generates an order to the telecommunication means, to transmit to the mobile telephone of a payer identified by the admissible telephone number, a first confirmation message that contains a request to transmit the safety parameter that is to be verified by the third verifying means against the safety criterion. This embodiment is applicable when the first message does not contain a safety parameter which is always the case when the first communication regarding a transaction has been established by a payee, and in those cases where a payer, in his/her first communication, has not yet transmitted a safety parameter. Thus, when the first message verified by the first verifying means is a message received from the telecommunication terminal of a payee, the second acceptance message generates an order to the telecommunication means to establish communication with the mobile telephone for requesting the payer identified by the admissible telephone number to transmit the safety parameter. On the other hand, when the first message verified by the first verifying means is a message received without a safety parameter from the mobile telephone of a payer, the second acceptance message generates an order to the telecommunication means, to transmit a message to said mobile telephone requesting the payer identified by the admissible telephone number to transmit the safety parameter.
The second message may be also designed to further generate an order to the telecommunication means to communicate with the telecommunication terminal identified by the admissible identification code detected by the first verifying means, to transmit a second confirmation message that confirms the generation of the first acceptance message. On the other hand, the third acceptance message generates an order to the telecommunication means to communicate with the telecommunication terminal identified by the admissible identification code detected by the first verifying means to transmit a third confirmation message that confirms the generation of the third acceptance message.

The third acceptance message generated by the third verifying means may be further designed to generate an order to the telecommunication means, to communicate with the mobile telephone identified by the admissible telephone number detected by the first verifying means, and to transmit a fourth confirmation message that confirms the generation of the third acceptance message, such that the payer receives a confirmation that the transaction has been authorized.

In an advantageous embodiment of the invention, the third acceptance message generated by the third verifying means generates a command to the account management means to process the debit in the payer's account and to process the corresponding credit in the payee's account.

At their end, the account management means control at least a first intermediate account of each payee contained in the first data storage means and in which each credit is made, and, in an advantageous embodiment of the invention, the account management means comprise first transmission means for transmitting said credit to an administration and management server that comprises a payees' data bank in which all credits made in favor of each payee are stored, the administration and management server transferring the credits contained in the data bank to financial entities that manage each payee's financial accounts.
On the other hand, the account management means advantageously may also be designed to control second intermediate accounts selected from prepayment accounts, such as accounts based on an electronic purse previously created in the first data storage means for each payer who has previously "loaded" this purse by means of a payment in an analogous manner to how conventionally electronic purses are loaded, for example, in payment cards or telephone cards, real time debit accounts having a performance being analogous to that of debits charged by banks on the grounds of payments made with debit cards, and post-payment accounts being analogous to bank accounts which are charged with payments made with credit cards. Each intermediate account of each payer is associated to a pre-established authorization criterion which is verified by the second authorization means. The authorization criterion may be, for example, an available balance in an intermediate account, a maximum credit limit and combinations thereof.

On the other hand, in an advantageous embodiment of the invention, the account management means comprise second transmission means for transmitting said debit to an administration and management server that comprises a payers' data bank wherein all debits made against each payer are stored, the administration and management server transferring the credits contained in the payers' data bank to financial entities that manage each payer's financial accounts., so as to make all required final transactions from the account of each payer to the account of each payee.

The safety criterion associated to each admissible telephone number and known to the payer identified by the admissible telephone number, may be a secret identification code, such as an alphanumeric code as for example a PIN code, stored in the first data storage means. In this case, the third identification means are designed to verify, in a manner known *per se,* if a safety parameter received from a digital mobile telephone of a payer involved in an transaction, corresponds to said code, by means of one of the following verification methods which are applied according to the kind of safety criterion associated to said admissible telephone number:
* Direct verification of whether the safety parameter contains the secret identification code;
* Verification of whether the safety parameter contains an encrypted result of a self-verification carried out locally in the mobile telephone after direct entry of the secret identification code into the mobile telephone by the payer, by means of decryption means for decrypting the encrypted result, on the basis of the secret identification code stored in the first data storage means.

In addition to the criteria ad information already described herein before, the first data storage means may further contain, at least in respect of certain payees, complementary information i.e. fourth information associated to said second information and which comprise reference code identifying products or services of a payee as well as a price associated to each product or service. This fourth information is useful in the applications of the system of the invention which will be described hereafter.

On the one hand the fourth information may be used to calculate the value of a requested transaction and for transmitting to the associated payers information and the products and/or services and/or total prices and/or partial prices of transactions the authorization of which is being or could be or is to be processed, and to thereby request the payer's conformity. Thus, in an embodiment of the invention, the second acceptance message further generates an order to the telecommunication means to transmit at least the value of the transaction, or the total value and a specification of products and/or services, corresponding to the transaction, together with an identification of the payee, which are transmitted together with the message requesting the safety criterion, to the mobile telephone of the payer identified by the admissible telephone number involved in the transaction.

On the other hand, the fourth information may furthermore comprise a first selectable telephone number, comprised of one of the aforementioned reference codes and an identification code of the corresponding payee, which selectable phone number constitutes the admissible identification, such that purchase of a product or service is enabled by means of the admissible identification codes, such as for example telephone numbers which each univocally identify each product or service, or each group of products or services of a certain payee.

On the other hand, the fourth information may further comprise the admissible identification code in the form of an access telephone number to the payee which access telephone number is associated to at least a first menu comprised of the reference codes, the products or services, identified respectively by each one of said reference codes and the price of said products or services.

In another embodiment of the invention, the first data storage means may group payees who, for example, offer similar products or services, under one same admissible identification code, particularly an admissible access telephone number which, when dialed, provides access to a menu of options wherein the payees grouped under the admissible access telephone number are specified, from which menu the payer may elect at least one payee being in turn identified by an admissible telephone. The menu may be designed in such a manner that, starting from the same, the payer may directly access the elected payee to know the payee's products and/or services, making his/her selection in the menu, or in such a way that election of a certain payee provides access to the payer, to fifth information associated to said second information and analogous to fourth information. This fifth information advantageously comprises reference codes that identify products or services of each one of the payee as well as a price associated to each product or service.

The system of the present invention is suitable to be used in and adapted to, a plurality of different transactions, such as purchases in person where the payer is staying in the premises, as for example a store, of a payee, purchase of software files by Internet, purchase of products or services with advance payment, delivery of products or services with a delivery receipt, and payment from one person to another.

Thus, in an embodiment applicable to when a payer wishes to acquire software files such as computer programs, computer games, music, videos etc., the system is designed in such a way that it may process a first message which, in addition to the payer's admissible telephone number, the payees admissible identification code of the payee who, in this case, is a software provider, contains a recipient e-mail address to which the payer wishes the software file to be transmitted by the payee. In this case, the system, in addition to performing the steps which have already been described herein before, operates with confirmation message generating means which additionally generate a further confirmation message that contains a decryption code of the software file, received from the payee in the first server, said further confirmation message being transmitted to the payer's mobile telephone so that the payer may decrypt the software file received at said recipient e-mail address.

On the other hand, when the system is used for making a purchase with advance payment, the system may be designed in such a way that the first server additionally comprises first detecting means for detecting a first instruction to make a purchase with advance payment and collection code generating means. In this embodiment, the confirmation message generating means further generate a complementary confirmation message that contains the collection code, said complementary confirmation message being transmitted to the payer's mobile telephone and to the payee's telecommunication terminal. Thereby, the payer or a person in which the payer has delegated, may receive the acquired product or service from the payee, by indicating to the payer the collection code.

In an embodiment of the system being applicable to transactions where issuance of a delivery receipt is required, the first data storage means further comprise, with respect to each payee, third information associated with said second information and that comprises data regarding products or services corresponding to each authorized transaction, and the first server further comprises second detecting means for detecting a second instruction to manage a delivery in person corresponding to an authorized transaction and received from the telecommunication terminal being a payee's mobile telephone, delivery code generating means for generating a delivery code identifying at least a product or service to be delivered, and identification message generating means identifying said product or service. In this embodiment, the confirmation message generating means further generate an additional message that contains the delivery code, said additional message being transmitted to the payer's mobile telephone and to the payee's mobile telephone and the identifying message being transmitted at least to the payer's mobile telephone along with a request to transmit the safety parameter. For managing the delivery, the system comprises delivery management processing means that, when the third verifying means have verified that the safety parameter satisfies the safety criterion associated to the payer's mobile telephone, generate an entry in a delivery note data, which, preferably, is inquirable by the payees for which such delivery notes have been generated.
In an embodiment of the invention applicable to transactions relating to purchases of associated payers in vending machines, the second information in the first data storage means comprises identification codes of a plurality of vending machines each one of which includes a digital mobile telephone as a telecommunication terminal, identified by a mobile telephone number as an admissible identification code, an authorization code associated to the admissible identification code of each vending machine and an activation code for activating the vending machine, associated to each authorization code that activates the vending machine for receiving a request from the payer identified by the admissible telephone number. In this embodiment, the confirmation message generating means generate, when the first, second and third verifying means have respectively generated the first, second and third acceptance message, and transmit the confirmation message that comprises at least the code for activating the vending machine and the admissible telephone number of the payer's mobile telephone. So that the payer may select and extract a product which he/she wishes to acquire at the vending machine, this embodiment may. depending on the pre-established conditions stored in the first data storage means, adopt one or both of the following configurations:

In accordance with the first of these configurations, the confirmation message generating means establish a communication between the payer's mobile telephone and the vending machine, for a pre-established period of time during which the payer can transmit, through the first server, a selection message to the vending machine. In this configuration, the server further comprises deactivation detecting means for detecting deactivation of the vending machine.

In accordance with the second configuration, the confirmation message generating means in the first server, close the communication with the vending machine after having transmitted the confirmation message, so that the payer may make his selection directly by means of the selection display or a keyboard of the vending machine.

In view that in the great majority of the cases the products dispensed by vending machines have only low prices, in this embodiment the authorization criterion associated to the admissible telephone number of each vending machine is a direct authorization code that establishes a maximum limit selected from an economic value and a number of dispensing requests, admitted in a specific period of time in respect of requests made from the same mobile telephone, such that the confirmation message generating means generate the confirmation message when the direct authorization code has been detected. Thereby, the need of the second verification means having to access the first data storage means for verifying the authorization criterion being specifically assigned to the payer is avoided and, thus, a greater speed and a lower cost of the transaction is achieved.

In this embodiment, the first server preferably further comprises recording means associated to the authorization means, for recording transactions recorded in each vending machine.
The system of the invention may be also adapted for enabling payment transactions from one associated user to another, for which purpose the system may be designed in such a manner that the confirmation message generating means generate, when detecting the first, second, third and fourth acceptance message, a first confirmation message containing an identification of the payer, an identification of the transaction and a petition for conformity to the payee identified in the first message. Said petition for conformity further comprises a request of transmission of the safety parameter which said confirmation message transmit to the mobile telephone of the payee identified by the second admissible telephone number through the telecommunication means selected by said selecting means. In turn, the third verifying means furthermore verify if the safety parameter transmitted from the mobile telephone in response to the petition for conformity, satisfies the safety criterion associated to the second admissible telephone number, and generate a fifth acceptance message when said parameter satisfies said safety criterion, whilst the authorization means authorize the account management means when said fifth acceptance message has been generated, whereafter the confirmation message generating means generate and transmit a second confirmation message to the mobile telephone of the payer and to the mobile telephone of the payee.

Preferably, at least the first server with the before describe means, is integral with a transaction and payment center.

On the other hand, the present invention also relates to a process for processing payments and transactions between payers and payees associated to the hereinabove described system, by using at least one mobile telephony communication, which process particularly comprises the steps of
- selectively receiving, through telecommunication means, in a payment and transaction center, a first message a first message comprising the number of a mobile telephone of a payer or an identification code of a payee, and, furthermore,
- receiving the amount of a purchase or of a code identifying a product or service, in the payment ad transaction center,
- verifying if the first message originates from a payer identified by an admissible telephone number or an admissible identification code of a payee;
- verifying if conditions of a transaction requested in the first message, satisfy transaction criteria stored in first data storing means;
- verifying the type of digital mobile telephone associated to the admissible telephone number, in second data storage means, and selecting one telecommunications equipment for communicating with the digital mobile telephone identified by the admissible telephone number, through a telecommunications service being compatible with the type of digital mobile telephone identified by the admissible telephone number;
- checking "on line", in the first data storage means, if the payer has a disposable balance in a previously created electronic purse in said transaction and payment center;
- requesting the payer identified in the first message, when the transaction condition is satisfied and there is a sufficient disposable balance for authorizing the transaction, to introduce into the mobile telephone identified in the first message, and to transmit, a safety parameter;
- verifying in the first data storage means, if the safety parameter introduced into and transmitted by, the mobile telephone of the payer, satisfies a safety criterion univocally assigned to said mobile telephone;
- authorizing and carrying out the transaction as requested when the safety parameter satisfies the safety criterion; and
- sending a confirmation that the transaction has been carried out, to the mobile telephone of the payer and to the payee.

All these steps are common for the different embodiments of the invention and in the event that the buyer makes a purchase in person, in other words, directly at the seller's store, the seller is the one who starts the transaction, and the identification of the buyer is done by means of the seller transmitting the buyer's mobile telephone number to the transaction and payment center.

In this case the identification of the seller is done implicitly by means of the communication that is established with the transaction and payment center in order to transmit the buyer's mobile telephone number along with the amount of the purchase or identification code of the product that is being purchased. This communication is carried out by means of a connection between a seller's mobile telephone and the transaction and payment center.

Therefore, the process of the invention comprises a step in which the buyer provides his telephone number to the seller. This step is carried out directly, by the buyer verbally informing the seller of his telephone number, or by means of reading a support that contains the buyer's telephone number. Obviously the buyer can communicate his mobile telephone number by any process and conventional device with an equivalent function.

After having verified the identity of the buyer and of the seller, verifying that both have been subscribed to the transaction and payment center, the process of the invention comprises the step of transmitting, to the buyer's mobile telephone by means of a connection from the transaction and payment center, a confirmation re-quest that he agrees with the collection order or re-quested transaction, that was carried out by means of the prior transmission of the amount of the purchase or identification code of the product that is being purchased. The data of the transaction are included in this request.

Then the buyer confirms the collection order by means of entering and transmitting his secret identification code, by means of his mobile telephone, to the transaction and payment center, wherein it is verified.

In order to carry out the communication between the transaction and payment center and the buyer's mobile telephone, it has been provided for that the process comprises a consultation step, on the part of the transaction and payment center, of a data base provided therein, a data base that contains the characteristics of each buyer's mobile telephone and from this consultation mobile telephone communication equipment is selected from among the following, equipment that are included in the transaction and payment center itself:
- Short Message Centers (SMC), from which the Short Message Service (SMS) defined in the ETSI specifications 03.38, 03.40, 04.11, 09.02, is permitted/carried out. By means of this system it is possible to exchange messages of up to 160 characters between mobile telephones or between mobile telephones and applications. Common short message centers, as well as specifically designed message centers will be used for the present transaction and payment system in order to permit synchronous communication between mobile telephones and the transaction and payment center. Said centers will be used in all short message communications ended in a mobile telephone.
- Unstructured Supplementary Service Data (USSD) Centers defined in the ETSI specifications GSM 02.90, 03.90, 04.80 and 04.90, by means of which it is possible to establish continuous and interactive text dialogues between a mobile telephone and an application, started by the user of the mobile telephone (MAP step 1 and 2) as well as by the application (telephones MAP step 2), by means of the use of the so-called USSD operations.

The above-mentioned USSD operations as well as the short message service make use of the Stand-alone Dedicated Control Channel (SDCCH) in the interface between the mobile telephone and the base station, of the Direct Transfer Application Part (DTAP) operations from the base station to the Mobile Network Switching Center (MSC), and of the Mobile User Application Part (MAP) operations between the MSC and the USSD centers and short message centers respectively.
- By means of Wireless Application Protocol (WAP) that permits communication between mobile telephones provided with suitable software and resident applications in Internet nodes, according to the specifications of the WAP Forum (http://www.wap-fprum.org), using the short message or data services as transport in the cases of GSM networks.

Therefore, the invention permits the exchange of information between the transaction and payment center and the different types of mobile telephones, without the mobile telephones having to be modified, in such a way that payment can be made by any type of mobile telephone.

The updating of the data base which includes the characteristics of each buyer's mobile telephone is done automatically for which purpose the transaction and payment center consults the nodes of the mobile telephone network.

In the secret identification code verification process, some of the following mechanisms intervene:
- Authentication and GSM ciphering that is based on the authentication center of the GSM network in which a Ki secret authentication code of each user resides. This same code resides inaccessibly in the user's Subscriber Identification Module (SIM). For access to the GSM network, the authentication center generates a RAND random number of 128 bits, a number which entered in the non-standard algorithms A3 and A8, together with Ki code, respectively produce a SRES parameter and a Kc session code. These parameters are stored in a Visitor Location Register (VLR) of the authentication center transmitting the RAND random number to the SIM where the same process is carried out: the SRES parameter is returned to the network, which authenticates the user, and the Kc session code is stored in the mobile terminal. From this moment the communication of the mobile telephone with the Base Station Controller (BSC) is ciphered using the algorithm A5 with the Kc code.
- Authentication and ciphering by means of software included in the SIM Toolkit Card, which is a programming model of the SIM cards, described in the ETSI specifications GSM 11.11 and 11.14. Irrespective of the application of GSM ciphering that all the SIM cards carry out, SIM applications that carry out the same management of digital certificates that is presently carried out in personal computer applications, can be developed.
- Authentication and ciphering by means of software in the mobile telephone, in the event that the mobile telephone has the necessary processing capacities, the above-mentioned management of digital certificates can be carried out in the mobile telephone itself.

The result of the local verification, just as it has already been indicated, is sent to the transaction and payment center in these last two cases.

Furthermore for a purchase in person, after verification, in the transaction and payment center, that the secret code is correct, the process comprises a step of subtracting the amount of the transaction from the buyer's purse, and once the confirmation of the transaction has been made to the buyer and to the seller, and after a certain amount of time, there is a step for up-dating the data of the transaction carried out, which leads to credit to the stores and debit to the buyers, in terms of the type of payment chosen. Two types of payment have been defined by means of which the user of the service will be able to pay the amount of his purchases:
- Prepayment: The buyer previously charges an amount of money in his purse previously open in the transaction and payment center. Once the purchases are made, the amount thereof is subtracted from this account in real time.
- Post-payment: The amount of purchases made during a month are entered in the user's purse and the total thereof will be billed monthly in the current account indicated by the user.

In both cases secondary accounts may be associated to a main account, in such a way that several users, each one provided with his own mobile telephone and each one associated to a secondary purse, may use the service, in which a single holder appears.

By means of the process of the invention, there is also the possibility of making a purchase in advance, in which case the process is identical to the one described for the purchase in person, with the difference that the buyer provides his telephone number to the seller by means of a connection of the buyer with the seller's service center or automatic sale system, from which the seller transmits the amount of the purchase or identification code of the product that is being purchased to the transaction and payment center.

Then the transaction and payment center transmits to the seller, a collection code along with the amount of the purchase or identification code of the product that is being purchased.

Furthermore, after subtracting the amount of the purchase from the buyer's purse, the confirmation is transmitted to the buyer so that the order collection code is transmitted to the buyer, and the stipulated de-livery time of the purchase that is being made is also transmitted.

In this way, when the buyer is going to collect the purchased product, the collection code constitutes the receipt code, that guarantees that payment has been made and furthermore it represents the product that is going_to be delivered to the buyer.

The invention also permits purchases to be made by Internet, in which case the store is a conventional virtual store that is communicated by Internet or by any type of network, with the transaction and payment center.

In this case the process is exactly the same as the one described for a purchase in person, but with the difference that the buyer transmits his telephone number to the virtual store by Internet.

In the event that the purchase by Internet is done from a mobile telephone with WAP capacity, the buyer's telephone number will have been implicitly communicated to the seller upon establishing the communication between both, and the collection order is communicated to the buyer, either by the processes described for a purchase in person, or else by the WAP communication established between the transaction and payment center and the buyer's mobile telephone.

The invention also permits a purchase to be made from vending machines, in which case the process is exactly the same as the one described for a purchase in person with the difference that now it is the buyer who starts the transaction by means of a connection between his mobile telephone and the transaction and payment center, in such a way that identification thereof is carried out implicitly by the connection made; and the identification of the vending machine (seller) is made by transmitting an identification code of the machine associated to it, on the part of the buyer, by means of the connection made. For this purpose the vending machine should include a mobile telephone.

Once the transaction and payment center has verified the identity of the buyer and of the vending machine, a connection is made with said vending machine transmitting an activation signal thereof. This connection is made by a mobile telephone that is included in the vending machine, which after activation carries out the following steps: displaying the buyer's identity on a screen, which permits the buyer to select/choose the product, and then the product is dispensed.

In an embodiment of the invention, the charge orders accumulated in the vending machine are periodically questioned by the transaction and payment center which processes all accumulated orders for.

When the process of the invention is applied to a vending machine, the phases and means already described herein above in respect of the system of the invention, are used.

The invention also permits the purchase of Intellectual Property i.e. software files as mentioned herein above, to be made by Internet, for which purpose the buyer provides his mobile telephone number to the store on line, in this case a virtual store; and the collection transaction is started from this store just as it has been described in the case of payment by Internet, with the difference that in this case after clearing the files encrypted in the buyer's equipment, the buyer requests the decryption codes from the transaction and payment center, these codes being generated by the seller and transmitted along a safe channel to the transaction and payment center, which determines the acknowledgment of the files and therefore delivery thereof, comprising the subsequent transmission step, on the part of the transaction and payment center, of the decryption codes to the buyer's mobile telephone, which constitutes the verification of delivery of Intellectual Property.

The invention may further be used to carry out functions of an electronic delivery note, in which case the seller carries out the connection between his mobile telephone and the transaction and payment center, in such a way that the seller is implicitly identified by the connection made wherein the identification code of the product that is going to be delivered is transmitted, in such a way that after making said identification the seller requests a control number from the transaction and payment center, in order to make the delivery of a product to the buyer. Then the transaction and payment center by means of a connection with the buyer, transmits it the control number requested by the seller, as well as the product that is going to be delivered, and then his secret code is requested, which after being entered by his mobile telephone, this implies acknowledgment of the delivery and acceptance of the product.

In this way the physical receipt is replaced by the described process, permitting automation of the seller's logistic control eliminating paper, for which purpose a data base accessible to the seller is provided for.

In respect of this latter case it should be pointed out that the transaction may or may not be accompanied by payment, depending on what has been agreed upon between both parties.

Obviously, the operational and technical characteristics as described hereinbefore in respect of the system, are also applicable to the process of the present invention and viceversa.

### BRIEF DESCRIPTION OF THE FIGURES

The invention will be hereafter be described on the grounds of drawings in which
**Figure 1** is a functional block diagram of a possible embodiment of the system of the invention for making a purchase in person, a purchase in advance, and a purchase by Internet,
**Figure 2** shows a functional block diagram of a possible embodiment of the system of the invention in order to make the purchase from a vending machine,
**Figure 3** shows a functional block diagram of a possible embodiment of the system of the invention for purchasing Intellectual Property by Internet,
**Figure 4** shows a possible embodiment of a functional block diagram of the system of the invention for carrying out the functions of an electronic delivery note according to the process of the invention,
**Figure 5** shows a functional block diagram of a possible embodiment of the system of the invention for making a purchase by catalogue, a purchase in response to television commercials or pay per view,
**Figure 6** shows a functional block diagram of a possible embodiment of the system of the invention in order to carry out a transaction between users,
**Figure 7** shows a schematic representation of an embodiment of the interrelation of the various means constituting the first server included in the transaction and payment center represented in the preceding figures.

### DESCRIPTION OF THE PREFERRED EMBODIMENTS

A description is made hereinafter of the invention on the grounds of the above-cited figures.

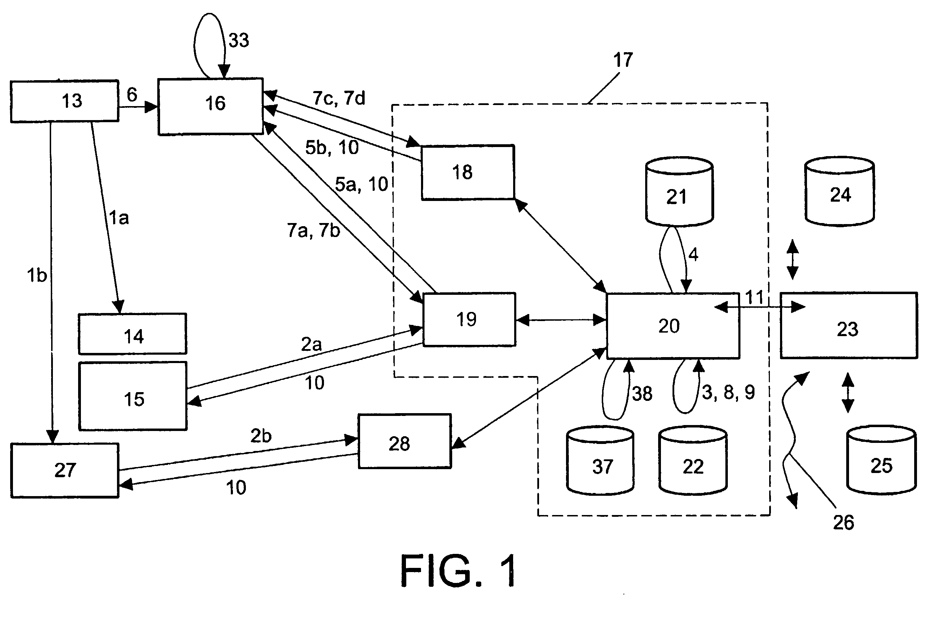

Figure 1 illustrates the process for purchases in person, in other words the purchases wherein a payer (13), who in this case is a buyer, goes to the store of the payee (14), who in this case is a seller in order to make the purchase.

In order to make the purchase it is necessary for the seller (14) and the buyer (13) to be subscribed to a transaction and payment center (17), for which purpose each buyer (13) is assigned a secret code that is related to his mobile telephone number.

In the purchase in person the buyer (13) communicates, by means of a step (1a), to the seller (14) his Mobile Station International Number Integrated Services Digital Network Number (MSISDN) or a number related thereto, different from the secret identification code. This step (1a) is carried out either orally or by means of an optical pencil provided for in the equipment of the seller (15), a pencil which reads a bar code of a label or customer's card. For example, this card can be adhered to the mobile telephone (16) of the buyer (13).

The seller (14), by means of the equipment (15) establishes a communication (2a) with a transaction and payment center (17) in order to request authorization of a transaction. In the communication (2a) a collection order that contains the buyer's (13) MSISDN or the number related thereto is transmitted, as well as the amount of the transaction whose authorization is being requested.

As an example, the equipment (15) can be comprised of a compact mobile terminal based on a microprocessor which stores the corresponding programming that permits the sale application according to the invention to be made, and that includes a screen, a keyboard and a mobile telephone with USSD step 2 communication capacity, in order to make the different communications with the transaction and payment center (17) by means of a mobile telephone.

In order to permit the establishment of the communication (2a), the transaction and payment center has USSD mobile communication equipment (19) by means of which the communication (2a) with the mobile telephone of the seller's equipment is established.

Moreover, the transaction and payment center (17) has an on line transaction and payment server (20) that includes a data bank (21) for storing the types of the mobile telephones (16) of each buyer (13) and of each seller (14), as well as the telephone number of each one of them; and that also includes a data bank (22) which stores the data referring to the transaction and payment center (17).

Said data bank (22) also stores first information on each buyer (13) and second information on each seller (14) being subscribed to the payment service materialized by the transaction and payment center (17); for which purpose the data bank (22) stores the buyers' telephone numbers, the secret code that is assigned to each buyer upon being subscribed to the payment service and a code of each buyer being his/her telephone number or a thereto related number. In the event that a number related to the buyer's telephone number is transmitted, this number is also stored in the data bank (22).

Hence, the server (20) verifies by means of first verifying means (20a) the merchant's identity by means of the source of the communication (2a), since his/her telephone number is implicit in the connection made by the equipment (15), and furthermore it verifies by means of the means (20a) that the buyer's telephone number transmitted, or the number related thereto, corresponds to a subscriber of the payment service and if the verification is correct it generates an acceptance message.

Furthermore the server (20) verifies by means of second verifying means (20b) a pre-established authorization criterion by verifying the buyer's balance or amount of credit, by means of step (3). The verification of the balance is made in a purse previously opened in the data bank (22) and if the verification is correct, a second acceptance message is generated.

If the previous verifications provide a positive result and as a result the acceptance messages have been generated, communication with the buyer (13) is established. In this communication the server (20) transmits to the buyer's (13) mobile telephone (16) a collection order confirmation request (5a) or (5b), either by means of the USSD mobile communication equipment (19) (5a) or mobile communication equipment materialized by a Short Message Center (18) (SMC) (5b), depending on the type of mobile telephone (16) owned by the buyer (13), in such a way that communication with any type of mobile telephone that the buyer has acquired, is permitted.

For the selection of the step (5a) or (5b), the server (20) consults, by means of step (4), the data bank (21), by means of the selecting means (20h), in order to verify what type of mobile telephone the buyer (13) owns and in order to select the equipment (18) or (19) through which the communication is carried out.

At this stage it should be pointed out that the data base (21) is updated automatically by means of one or more of the possibilities already described hereinbefore in chapter "Description of the Invention", by means of a consultation process of the nodes of the mobile communication network, in which the International Mobile Equipment Identifier (IMEI) of the buyers' (13) mobile telephones (16) are recorded, and from which the system knows said characteristics.

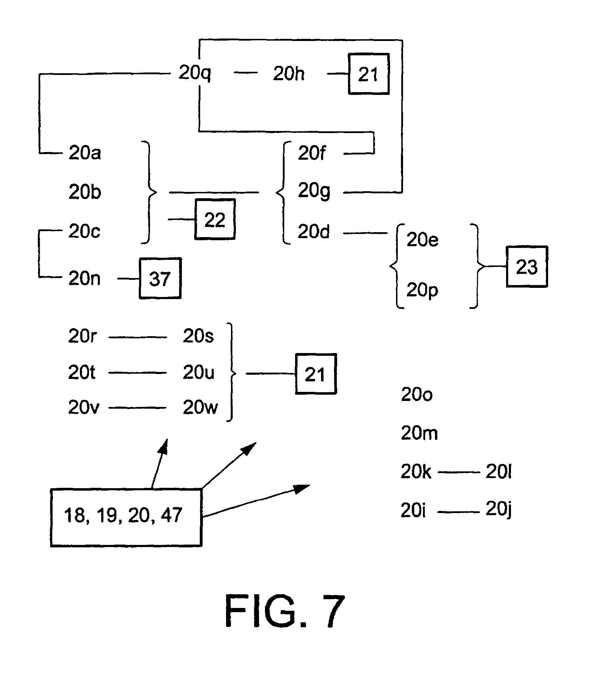

Figure 7 show, *inter alia,* an embodiment of the first server (20) with a plurality of materializations of inquiry and updating means for inquiring and updating the IMEI codes, in all of which each second information contained in the second data storage means (21) and referring to the type of digital mobile telephone (16,40) contained in the second data storage means in respect of each admissible telephone number of each associated payer (13) and each admissible identification code of each payee (40) (when this latter code is a number of a digital mobile telephone as will be explained herein below), is a first identifying code being representative of a IMEI code.

Thus, in a first materialization, the first inquiry means (20r) extract the IMEI code associated to each admissible phone number, from an Equipment Identifier Register (EIR) that contains an association between each admissible telephone number and the IMEI code corresponding to each admissible telephone number, and which receive said association from each Visitor Location Register as updated by said Visitor Location Register.

In a second materialization, the first inquiry means (20r) extract the IMEI code associated to each admissible telephone number, from an Unstructured Supplementary Service Data (USSD) frame into which each Visitor Location Register associated to each Mobile Switching Center (MSC) which has issued said frame, has inserted the IMEI code associated to the admissible telephone number corresponding to the user who has originated said frame.

In a third materialization, the first inquiry means (20r) extract the IMEI code associated to each admissible telephone number, through an interface between the Visitor Location Register and said inquiry means (20r).

In a fourth materialization, the first server (20) comprises second inquiry means (20t) for inquiring the IMEI code corresponding to each admissible telephone number, in Call Data Registers (CDR) of a data bank of a mobile telephony network operator, that contain a relation of each telephone number which, on the grounds of a call, has originated a Call Data Register with an IMEI code of the terminal from which said call originated, and second updating means (20u) for updating said second information in the second data storage means (21) on he basis of a comparison of each IMEI code inquired by the second inquiry means (20t) with each code being representative of the IMEI code associated to each admissible telephone number, contained in the second data storage means (21).

In a fifth materialization, the second information further comprises at least one datum being indicative of a communication capacity selected from a capacity of managing sessions according to Wireless Application Protocols (WAP), a capacity of managing sessions of Unstructured Supplementary Service Data (USSD), and combinations thereof, of each digital mobile telephone identified by an IMEI code and associated to an admissible telephone number.

Finally, in a sixth materialization, the first server (20) comprises second inquiry means (20t) for inquiring the IMEI code corresponding to each admissible telephone number, in Call Data Registers (CDR) of a data bank of a mobile telephony network operator, that contain a relation of each telephone number which, on the grounds of a call, has originated a Call Data Register with an IMEI code of the terminal from which said call originated, second updating means (20u) for updating said second information in the second data storage means (21) on he basis of a comparison of each IMEI code inquired by the second inquiry means (20t) with each code being representative of the IMEI code associated to each admissible telephone number, contained in the second data storage means (21).

Obviously, although figure 7 shows a plurality of materializations coexisting in the first server (20), the system of the invention may comprise only one or some of said materializations.

In the event that the mobile telephone (16) has USSD version 2 capacities, step (5a) is carried out by means of the transmission of a USSD frame, a process by means of which the connection between the mobile telephone (16) and the server (20) is open. Upon receiving this frame, the mobile telephone (16) displays on the screen the authorization request with the details of the collection order.

In the event that the mobile telephone (16) does not have USSD version 2 capacities, this request is made by the transmission (5b) of a class 0 short message with the de-tails of the collection order and instructions to transmit the authorization. Upon receiving a class 0 short message, the mobile telephone (16) displays it on the screen, without the need of the user navigating through the structure of menus stored in his mobile telephone. A short message center (18), that is characterized in carrying out synchronous communications, is used to transmit these confirmation request messages.

Returning to figure 1, it can be appreciated that the buyer (13) confirms the collection order received (5a) or (5b) by entering (6) the secret code that was assigned to him upon being subscribed to the service, by means of the keyboard of his mobile telephone. This identification code can be locally verified, in the mobile telephone, by step (33) in the event that the mobile telephone has SIM card authentication mechanisms. In this case, step (7d) is carried out, a step in which the result of the encrypted local authentication is transmitted to the payment server by means of a short message directed to the above-mentioned synchronous short message center (18). In this case the transaction and payment center decrypts and verifies the result of said verification from the user's secret identification code that is stored.

If these mechanisms are not available, the secret code is transmitted by using the ciphering of the mobile communication network described in the Description of the Invention, by means of any of the processes indicated hereinafter:

In the event that it is a mobile telephone (16) with USSD version 1 and 2 capacity, that has received the request by step (5a), the secret identification code that the buyer has keyed in step (6) is transmitted by step (7a) over the connection that was opened in said step (5a).

In the event that it is a mobile telephone with USSD version 1 capacity, that has received the request by step (5b), the sequence that the buyer has keyed consists of a USSD service code, followed by the secret code, and it is transmitted by step (7b) in a USSD version 1 operation frame originated in the mobile telephone.

In the event that it is a mobile telephone without USSD capacity, that has received the request by step (5b), the sequence that the buyer (13) keys consists of the secret code, that is transmitted by step (7c) in a short message, by a response to step (5b), either to a short number assigned to said service by the operator, depending on the buyer's (13) mobile telephone (16) number.

Then the server (20) verifies by means of third verifying means (20c) the secret code transmitted by the buyer (13). The verification is carried out by means of step (8), and in the event that the verification result is positive, a third acceptance message is generated.

The server (20) has authorizing means (20d) which when it receives the three authorization messages, it authorizes some account management means (20e) included in the server (20) to subtract the amount of the transaction from the buyer's purse/credit account and to credit said amount to the seller's account by means of step (9); and it transmits the confirmation of the transaction to the seller's (15) terminal as well as to the buyer's (13) mobile telephone (16) by means of steps (10). This confirmation is carried out by means of some confirmation message generating means (20g) included in the server (20). These means (20g) can also confirm to the buyer (13) and/or to the seller (14) the verifications carried out by the means (20a) and (20b).

Then by step (11) which is an off line step, the data are updated towards an administration and management server (23), from which the subscriber processes are forwarded to the stores and the debits to the buyers, depending on the type of payment selected, by the specific applications built in relation with the financial entities, with which communication is established by means of line (26). In order to carry out this function, the administration and management server (23) has a data bank (24) of the stores, and a data bank (25) of the buyers.

The server (20) has rejection message generating means (20f), which when at least one of the acceptance messages has not been generated, it transmits a rejection message to the seller and/or to the buyer.

The operation described is identical for the case in which the purchase is made by Internet, in which case the payer is a buyer (13) and the payee is a virtual store (27) to which the buyer transmits his mobile telephone number, or the number related thereto, by step (1b), by means of the communication between the buyer (13) and the virtual store (27), just as it is conventionally done in this type of purchase, in other words, by Internet.

Then the virtual store (27) transmits a collection order (2b), equivalent to a previously described collection order (2a), but with the difference that this collection order is transmitted to a network (28) by means of which the communication with the server (20) is established.

In this case the process is the same as the previously described one, for which purpose the transmission of the confirmation by step (10) is done by the communication network (28).

The communication network (28) can be Internet, a digital integrated service network, the switched telephone network or any other network.

These accesses will be provided with the safety mechanisms necessary for each case.

Furthermore, the process illustrated in figure 1, also permits purchases with payment in advance to be made, for which purpose in this case, the buyer (13) informs the seller (14) of his telephone number by means of a telephone connection with a service center or by an automatic sale system that the seller has operative for this purpose. As of this point the process is the same as the one for a purchase in person, but with the difference that when the seller communicates with the transaction and payment center (17), he transmits along with the data of the transaction and with the buyer's (13) telephone number, an instruction indicating a purchase with payment in advance that is detected by some first detecting means (20i) included in the server (20), which also has a collection code generating means (20j) by means of which a collection code is generated upon detecting said instruction. This code is transmitted to the buyer and seller in step (10), along with the described confirmation of this step 10. In this way, when the buyer goes in person to the seller's (14) store, the previously ordered product, should inform him of the collection code so that the seller may know who the buyer in question is and which product should be handed over to him.

This operating mode is particularly useful in those stores that produce the production of a product only under the premise that the product is already paid for, for example perishable goods, and therefore, there is certainty that although the product is not collected later on, the price thereof has already been collected. This schema is only possible when the transaction is done on line. The providing of the collection code by the buyer to the seller constitutes the verification that payment has already been made in advance.

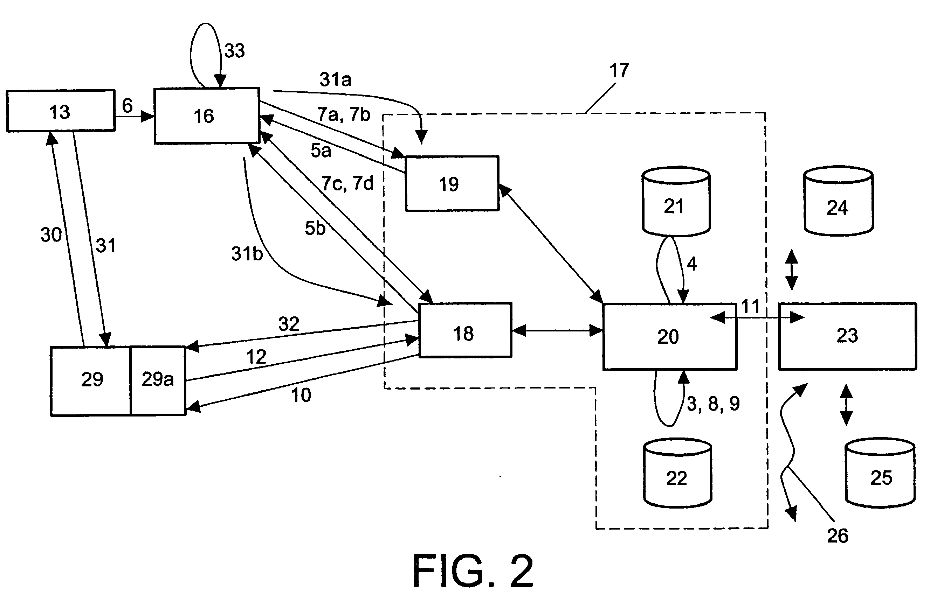

By means of the system and process of the invention, payments can also be made in vending machines, which is illustrated in figure 2.

In this case the payee is a vending machine (29), which should include a mobile telephone with short message and data communication capacity.

The buyer (13) reads from the vending machine (29) an identification code of the machine, which has been represented by step (30).

Then the buyer (13) by means of a communication (31a) or (31b), depending on the type of mobile telephone (16) he has, as it has already been previously described, transmits the identification code of the vending machine (29) to the server (20).

This step would be equivalent to step (2a), (2b), described above, but with the difference that the buyer's identification is now carried out implicitly by the connection (31a) or (31b), and the store's identification, in this case the vending machine (29) is carried out by the code transmitted by the buyer.

The transaction and payment center verifies the customer's identity, his balance or credit limit, the type of mobile telephone (16) and the mobile telephone number that the vending machine (29) is provided with. This is done by steps (3) and (4).

Steps (5a) (5b), (6), (7a), (7b), (7c), (7d), (8) and (9) are identical to the ones described above.

Then an activation order (32) of the vending machine is transmitted by the mobile telephone network (equipment 18 or 19). This activation order is carried out by the communication with the mobile telephone of the vending machine (29), for which purpose the transaction and payment center (17) establishes communication with the mobile telephone of the machine, which upon receiving said order, is activated in the same way as if coins had been inserted therein. Along with the activation order of the vending machine (29), the buyer's (13) identification is transmitted, in such a way that the vending machine displays it on a screen and then the buyer selects and obtains the desired product according to step (31). For this purpose the first server (20) closes the communication with the vending machine (20) and allow the payer to make a selection by the display or keyboard of the vending machine (29).
In an embodiment of the system when being applicable to a vending machine, the confirmation message generating means (20g) establish a communication between the mobile telephone o(16) of the payer (13) and the vending machine (29) during a preestablished period of time during which the payer (13) may transmit, through the first server (20), a selection message to the vending machine (29), i.e. the selection of the product is made by means of the mobile telephone (16) instead of by the display of the vending machine. After expiration of this period of time, the communication between the first server (20), the vending machine (29) and the payer (13) is closed.

There is also the possibility of the first server (20) comprising deactivation detecting means (20o) for detecting deactivation of the vending machine (29) which in this case also have the function of closing the communication between the first server (20), the vending machine (29) and the payer (13).

The vending machine (29) periodically, when it is questioned by the transaction and payment center (17), transmits to the server (20) the record of purchases and the users that have made them, according to step (12). For this purpose, the first server (20) comprises transaction recording means (20p) which record the transactions recorded in each vending machine (29) said recording means being associated to the authorization means (20d).

Step (10) is carried out upon making the periodic clearance of the purchases made.

In certain circumstances, such as for example the case in which the amounts of the transaction to be made are low, it could happen that it is not necessary to enter the buyer's secret code, in which case the steps corresponding to this operation would be eliminated.

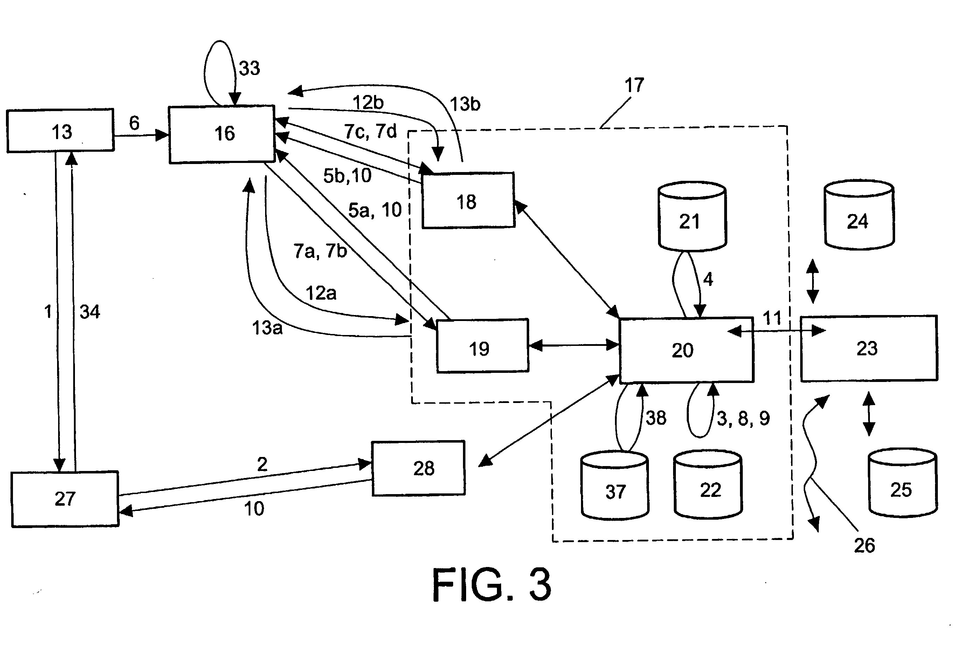

The system of the invention is also applicable in for processing purchases by Internet or other remote channels, which is illustrated in figure 3.

The buyer (13) (payer) by Internet, provides on line by means of step (1), his/her telephone number to the virtual store (27) (payee). Step (2), that consists of transmitting to the server (20) the collection order that contains the telephone number and the amount of the purchase to be made, is carried out from the virtual store (27) and by means of a network (28). In this operation the server (20) verifies the identities of the buyer and of the seller and generates a connection to the buyer's (13) mobile telephone (16), by means of the equipment (18) or (19) depending on the type of telephone that the buyer owns, in order to transmit a message that informs him of the store's identity, of the amount of the purchase and the secret code is requested according to the steps illustrated in figure 1. After verifying that there is an available balance, the transaction is confirmed to the buyer (13) and to the virtual store (27). Steps (1) to (10) are thus identical to the those already described herein above. Then the virtual store clears on line the software files encrypted in the buyer's (13) computer by Internet according to step (34). When the buyer (13) has received them, the decryption codes are requested from the server (20) by steps (12a) or (12b), depending on the type of mobile telephone. These codes are generated by the seller (27) and transmitted by a safe channel to the server (20) at the request thereof. Then the server's (20) confirmation message generating means (20g) generates a confirmation message that contains the decryption code of the software file that is transmitted to the buyer by means of steps (13a) or (13b), depending on the type of the buyer's (13) mobile telephone (16), and finally, the data are updated in the server (20) and in the administration and management server (23) by means of step (11) off line.

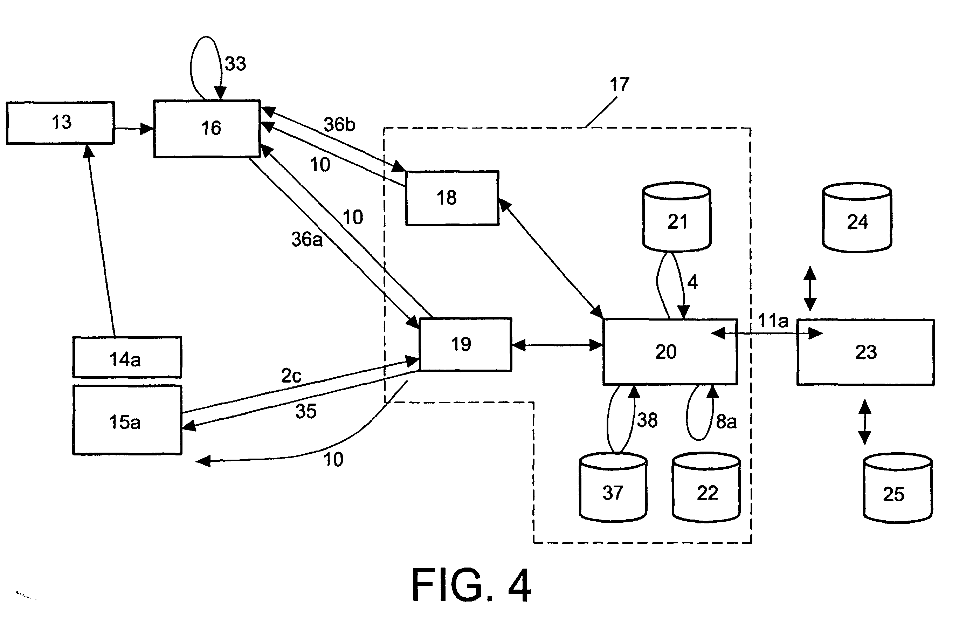

Furthermore, the system of the invention permits application thereof as an electronic delivery note, which is illustrated in figure 4.

When a supplier (14a) (payee) makes the delivery to a buyer's (13) premises, the supplier (14a) by a mobile telephone (15a) previously makes a communication (2c) with the transaction and payment center (17) to which the identification code of the product that is being purchased and the buyer's telephone number are transmitted, and furthermore a delivery code such as for example a control number is requested. For this purpose the seller transmits a second delivery management instruction that is detected by some second detecting means (20k) provided for in the server (20). Once the center (17) verifies the supplier's (14a) identity by the communication (2c), and as of said detection, by means of some generating means (201) of a delivery code, said code is generated and transmitted to the seller by step (35), in such a way that the center (17) identifies the type of the buyer's mobile telephone by step (4) and communicates with it by a connection (36a) or (36b), depending on the type of the buyer's (13) mobile telephone (16) just as it has already been explained. In the communication (36a) or (36b), the buyer (13) receives the data regarding the control number of the product that is delivered and the request of his secret code. For this purpose, the server (20) has message generating means (20m) for identifying said product or service.

Then the buyer enters his secret code, which implies acknowledgment of the delivery and acceptance of the product. The server (20) verifies that the data are correct by step (8a) in the manner already described in previous examples (step 8). Then by means of delivery management processing means (20n) included in the server (20), a entry is generated in a delivery note data base (37) and the delivery is confirmed to both by step (10). Finally the data of the delivery are updated by step (11a) off line in the administration and management server (23). The server's (20) data base (37) is accessible to the supplier permitting him to conduct a computer control of the status of his deliveries, a control that bears the digital signature of acceptance of his customers by the transmission of the control number and the secret code. This is done by step (38).

In this way, the physical receipt that is conventionally handed over to the buyer is replaced by the described process.

Likewise, this step (38) can be carried out with a purchase in person, a purchase in advance and a purchase by Internet, which were previously described.

These transaction may or may not be accompanied with payment.

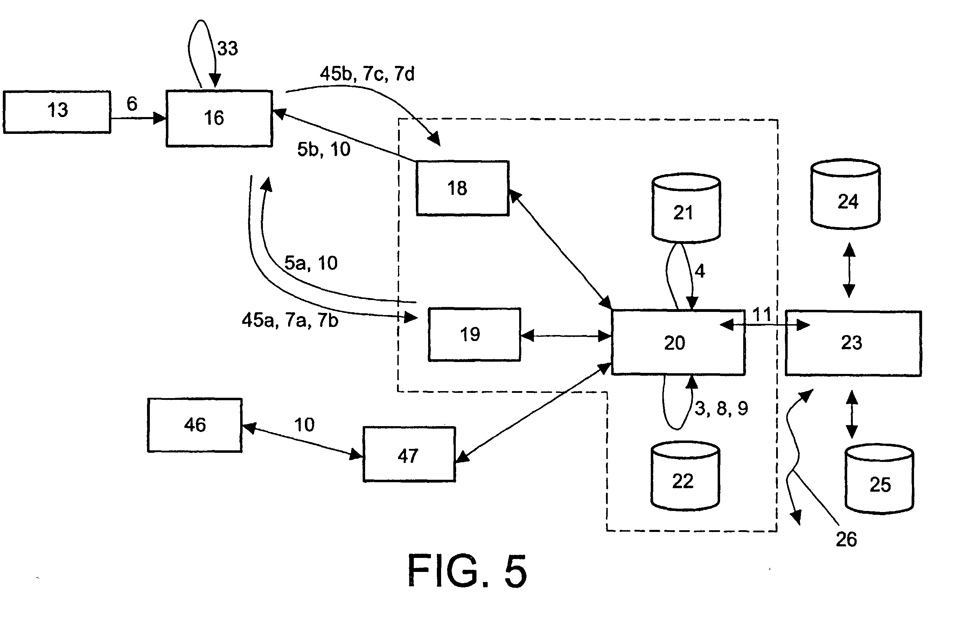

Figure 5 shows another possible embodiment of making a purchase by a product or a service code, that consists of assigning a code to the product or service in order to make a purchase by catalogue; a purchase in response to any type of commercial or advertisement, such as for example, television commercials or written advertisements, a pay per view, or any other type of purchase in which the indicated possibility is assigned.

In this case, for making the purchase, once the buyer knows the code assigned to the product that he/she wants to buy, the buyer calls the transaction and payment center (17) with his mobile telephone, establishing a communication (45a) or (45b), depending on the type of mobile telephone that the buyer (13) owns. The communication (45a) is established by means of the mobile communication equipment (19), and the communication (45b) is established by means of the short message center (18), just as it has been explained in the preceding cases.

By communication (45a) or (45b), the buyer transmits the telephone number corresponding to the product that he wants to buy This telephone number comprises a part indicating the code of the product that he wishes to buy, and another part indicating the seller's identity, and this is stored in the data bank (22).

At this point, it should be pointed out that, according to a further embodiment of the invention, there is the possibility that the telephone number itself dealt by the buyer for communicating with the transaction and payment center (17), permits access to the code of a series of different sellers, that are stored in the data bank (22), in such a way that when the transaction and payment center receives this telephone call, it has access to said data bank (22) and it transmits a message with the different options of the sellers to the buyer. As of this point, the selection, first of the seller, and then of the product that is to be purchased may be made. According to another embodiment, there is also the possibility that the number dialed by the buyer in order to have access to the transaction and payment center (17) refers to a specific seller, stored in the data bank (22) of the transaction and payment center, in such a way that the transaction and payment center (17) transmits a message with said seller's different products to be selected to the client.

This structure has the advantage that the user does not need to know the codes of the products, but rather on the contrary, the user can have access to the products of a specific seller, or of several sellers, by phoning a generic telephone number.

In any case, the selection of the mobile communication equipment (18, 19) for establishing the communication (45a) or (45b) with the buyer, is carried out by means of step (4), in which the server (20) consults the data bank (21), just as it has already been explained, in order to determine what type of mobile telephone the buyer (13) owns.

Likewise, in this case the server (20) verifies the buyer's identity by means of the source of the communication (45a) or (45b), since his telephone number is implicit in the connection made, and furthermore it verifies that the telephone number of the product corresponds to a seller subscribed to the payment service, and it determines the product that is purchased and the price thereof from the code received. This code, just as it has been indicated can be obtained directly from the number dialed by the buyer, or indirectly from the seller or sellers that the initially dialed telephone number refers to.

There is the possibility that the data referring to each product of each seller are stored in the equipment of the seller himself (46), in which case the transaction and payment center (17) questions the seller (46), by means of the communication network (47) that connects them, about the price and product to which the buyer is referring. The seller (46) responds with the adequate data and the transaction and payment center (17) informs the buyer (13) thereof.

Then step (3) for verifying the balance is carried out in any of the indicated cases, and if the previous verifications give a positive result the previously described steps (5a) or (5b) for confirming the collection order are generated.

Then the buyer (13) confirms the collection order (5a) or (5b) received, the secret code being introduced by means of the keyboard of his mobile telephone and being verified by means of step (8) from the previously described steps (33) and (7d) or (7a), (7b) or (7c).

In the event that the result of the verification is positive, the amount of the transactions is subtracted from the buyer's purse/credit account and the amount is credited to the seller's account by means of step (9), and the identification of the buyer and of the purchased product are communicated to the seller (46) by means of a communication network (47) so that the seller sends the purchased product to the buyer's domicile. Furthermore, the confirmation of the transaction is sent by means of steps (10).

Thereafter, previously described step (11) is carried out.

By means of the network (47), the seller (46) updates the data base (22) of the transaction and payment center (17) regarding its products, prices and codes that affect them, each time that said sellers make a modification thereof, when these data are stored in said center (17).

In the event that it is a pay per view, the buyer starts the typical transaction by telephoning the number that appears on the television screen, from which the transaction and payment center (17) communicates with the television broadcasting center that broadcasts the selected decoded program, and to which the buyer who is selecting the purchase of the program is indicated. In other words, it operates just like in the case of delivering a physical product, except that in this case the seller delivers a television signal.

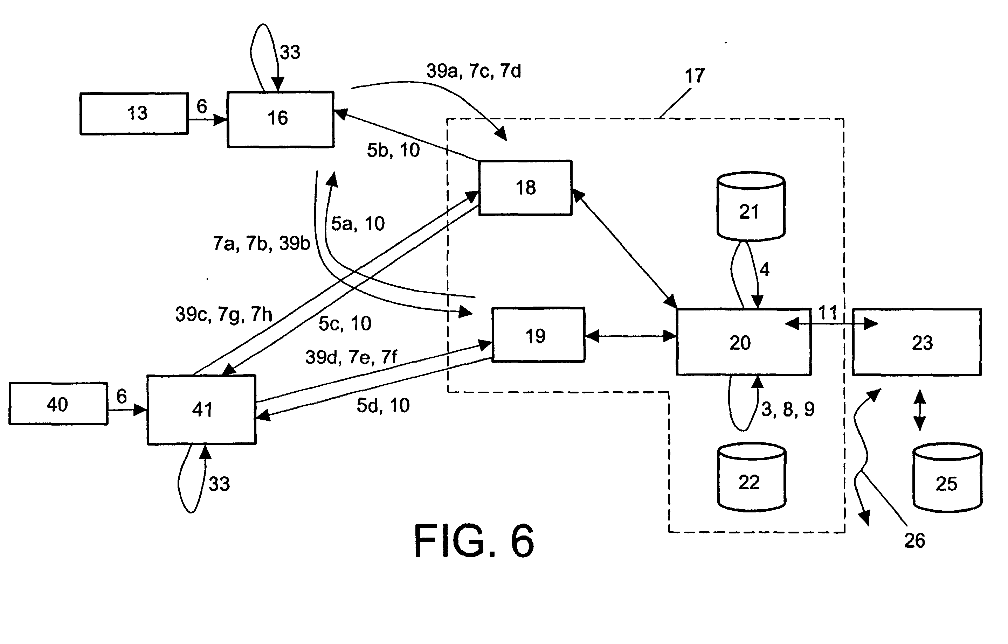

Figure 6 shows another possible embodiment whereby transactions between users (13) and (40) who own a mobile telephone (16), (41), respectively, and who are obviously subscribed to the transaction and payment center (17) are made possible in the above-mentioned manner.

In this case the user (13) constitutes a payer, and the user (40) constitutes a payee.

Hence, when a payer (13) wishes to carry out a transaction in favor of a payee (40), a communication (39a) is established with the short message center (18) or a communication (39b) is established with the mobile communication equipment (19), depending on the type of mobile telephone that the user has.

In this case, the payment order that contains the payee's (40) telephone number or the number related thereto is transmitted in the communication (39a) or (39b) and furthermore, the amount of the transaction whose authorization is being requested, is transmitted. This may correspond, for example, to a debt that is to be settled, or to a credit that is to be made.

In this case the transaction and payment center stores the data corresponding to the payee (40) in its data banks (21) and (22), in the same way that it does with the payer (13).

The selection of the communication equipment in order to establish the communication (39a) or (39b) is carried out by means of step (4).

The payer's (13) identity and the payee's (40) telephone number are verified by means of the origin of the communication (39a) or (39b) and then, the payer's balance is verified by means of step (3).

When the previous verifications give a positive result, steps (5a), (6) and (7a), or (5b), (6) and (7b), or (5b), (6) and (7c), and finally step (8) are carried out in the manner that has already been described.

Then the server (20) transmits a payment order confirmation request (5c) or (5d) to the payee's (40) mobile telephone (41), depending on the type of mobile telephone that the payee (13a) owns. This is selected by means of step 4.

For the selection of steps (5c) or (5d), the server (20) carries out a process identical to the one described for steps (5a) or (5b), in such a way that steps (7) and (7f) are identical to steps (7a) and (7b), and steps (7g) and (7f) are identical to steps (7c) and (7d).

Firstly, the server verifies the secret code sent by the payee (40) by means of step (8), and in the event that the result of the verification of both secret identification codes corresponding to the payer and the payee is positive, the amount of the transaction is subtracted from the payer's purse or credit account by means of step (9) and the amount of the transaction is credited to the payee's purse/credit account by means of said step (9) and then, the confirmation is transmitted to the payer (13) and to the payee (40) by means of steps (10).

Finally, step (11) is carried out in the manner that has already been described.

Obviously, there is the possibility that the transaction may be started by the payee (40), in which case the process is carried out in the reverse manner from the one described, in other words, the confirmation of the payee's secret code is requested and then the confirmation of the payer's secret code is requested.

## Claims

1. A system for processing payments and transactions between payers (13) and payees (27, 29, 14, 14a, 13a, 46) associated to the system, using at least one communication by means of digital mobile telephony, the system comprising
- a first server (20) interconnected with telecommunication means (18, 19, 28, 47) with first data storage means (22), and including account management means (20e) that process first data of an account of each associated payer (13) and second data of an account of each associated payee (27, 29, 14, 14a, 40, 46);
wherein
- the first telecommunication means (18, 19, 28, 47) selectively communicate the first server (20) with a digital mobile telephone unit (16) identified by an admissible telephone number of an associated payer (13) and with a telecommunication terminal (15, 15a, 27, 29, 41, 46) identified by an admissible identification code of an associated payee (27, 29, 14, 14a, 40, 46); the telecommunication means (18, 19, 28, 47) comprising a plurality of telecommunication equipments (18, 19);
- the first data storage means (22) contain first information on each associated payer (13), said first information comprising at least the admissible telephone number, at least a pre-established authorization criterion for authorizing at least one transaction that requires a payment from the associated payer's (13) account and at least a safety criterion associated univocally to the associated payer's (13) telephone number, as well as some second information on each associated payee (27, 29, 14, 14a, 40, 46) that comprises at least the admissible identification code;
the first server (20) comprising
- first verifying means (20a) for verifying in the data storage means (22) whether a first message received through the telecommunication means (18, 19, 28, 47) contains an admissible telephone number of an associated payer (13) and an admissible identification code of an associated payee (27, 29, 14, 14a, 40, 46), said first verifying means (20a) generating a first acceptance message when they detect an admissible identification code and an admissible telephone number;
- second verifying means (20b) for verifying in the data storage means (22) whether a transaction authorization request received through the telecommunication means (18, 19, 28, 47) in addition to the admissible telephone number detected by the first verifying means, satisfies said pre-established authorization criterion, said second verifying means (20b) generating a second acceptance message when the authorization request satisfies said authorization criterion;
- third verifying means (20c) for verifying in the first data storage means (22) whether a safety parameter received through the telecommunication means (18, 19) satisfies the safety criterion associated to the admissible telephone number detected by the first verifying means, said third verifying means (20c) generating a third acceptance message when they detect that the safety parameter satisfies the safety criterion associated to the admissible telephone number;
- authorization means (20d) for authorizing the account management means (20e) on the basis of the authorization request, to process a debit in the associated payer's (13) account and to process a corresponding credit in the associated payee's (27, 29, 14, 14a, 40, 46) account as long as the first, second and third acceptance messages have been generated;
- rejection message generating means (20f) for generating a rejection message when at least one of the acceptance messages has not been generated, and for transmitting the rejection message to the telecommunication means (18, 19, 28, 47);
- confirmation message generating means (20g) for generating at least a confirmation message when at least one of the acceptance messages has been generated, and for transmitting said confirmation message to the telecommunication means (18, 19, 28, 47), and for selective transmission of the confirmation message to the mobile telephone (16,41) identified by the admissible telephone number in said first message, and to the telecommunication terminal (15,15a,27,29,41,46) identified by the admissible identification code;
- second data storage means (21) that contain at least first information referring to the admissible telephone number of each payer (13), and at least second information referring to the type of digital mobile telephone (16, 41) belonging to each telephone number;
- selecting means (20h) for verifying in said second data storage means (21), the second information corresponding to the digital mobile telephone unit (16, 41) identified by the admissible telephone number and for selecting one of the telecommunication equipments (18, 19) that communicates with a digital mobile telephone (16, 41) identified by the admissible telephone number by means of a telecommunication service being compatible with the type of digital mobile telephone (16, 41) identified in said second information.

2. A system according to claim 1, wherein the admissible identification code of each payee (27, 29, 14, 14a, 40, 46) is selected among a telephone number, a number related to a telephone number, an Internet code, a code representative of an Internet code, an e-mail address, and a code based on an e-mail address.

3. A system according to claim 1, wherein the first verifying means verify the payer's (13) admissible telephone number from a code received through the telecommunication means (18, 19, 28, 47), representative of said admissible telephone number and contained in the first data storage means (22).

4. A system according to claim 1, wherein the second acceptance message generates an order to the telecommunication means (18, 19) to transmit to the mobile telephone (16) of a payer (13) identified by the admissible telephone number, a first confirmation message that contains a request to transmit the safety parameter that is to be verified by the third verifying means (20c) against the safety criterion.

5. A system according to claim 4, wherein the second acceptance message further generates an order to the telecommunication means (18, 19, 28, 47) to communicate with the telecommunication terminal (15, 15a, 27, 29, 46) identified by the admissible identification code detected by the first verifying means (20a), to transmit a second confirmation message that confirms the generation of the first acceptance message.

6. A system according to claim 1, wherein the third acceptance message generated by the third verifying means (20c) generates an order to the telecommunication means (18, 19, 28, 47) to communicate with the telecommunication terminal (15, 15a, 27, 29, 46) identified by the admissible identification code detected by the first verifying means (20a) to transmit a third confirmation message that confirms the generation of the third acceptance message.

7. A system according to claim 1 or 6, wherein the third acceptance message generated by the third verifying means (20c) generates an order to the telecommunication means (18, 19) to communicate with the mobile telephone (16) identified by the admissible telephone number detected by the first verifying means (20a), and to transmit a fourth confirmation message that confirms the generation of the third acceptance message.

8. A system according to claim 1, 6 or 7, wherein the third acceptance message generated by the third verifying means (20c) generates a command to the account management means (20e) to process the debit in the payer's (13) account and to process the corresponding credit in the payee's (27, 29, 14, 14a, 40, 46) account.

9. A system according to claim 1 or 8, wherein the account management means (20e) control at least a first intermediate account of each payee (27, 29, 14, 14a, 40, 46) contained in the first data storage means (22) and in which each credit is made.

10. A system according to claim 9, wherein the account management means (20e) comprise first transmission means for transmitting said credit to an administration and management server (23) that comprises a payees' data bank (25) in which all credits made in favor of each payee (27, 29, 14, 14a, 46) are stored, the administration and management server (23) transferring the credits contained in the data bank (25) to financial entities that manage each payee's financial accounts.

11. A system according to claim 1 or 8, wherein the account management means (20e) control second intermediate accounts selected from prepayment accounts, debit accounts in real time and post-payment accounts, of the payers (13).

12. A system according to claim 11, wherein the prepayment accounts controlled by the account management means (20e) comprise an electronic purse previously created in the first data storage means (22) for each buyer (13).

13. A system according to claim 1, wherein the authorization request comprises data regarding the value of the transaction, and wherein the pre-established authorization criterion verified by the second verifying means (20b) is selected among an available balance, a maximum credit limit and combinations thereof, established for each account of each payer (13).

14. A system according to claim 8, wherein the account management means (20e) comprise second transmission means for transmitting said debit to an administration and management server (23) that comprises a payers' data bank (24) wherein all debits made against each payer (13) are stored, the administration and management server (23) transferring the credits contained in the payers' data bank (24) to financial entities that manage each payer's financial accounts.

15. A system according to claim 1, wherein the safety criterion verified by the third verifying means (20c) is a secret identification code known by the payer (13) and stored in the first data storage means (22).

16. A system according to claim 15, wherein the third verifying means (20c) directly verify whether the safety parameter contains the secret identification code.

17. A system according to claim 15, wherein the third verifying means (20c) verify whether the safety parameter contains an encrypted result of a self-verification (33) carried out locally in the mobile telephone (16) after direct entry (6) of the secret identification code into the mobile telephone by the payer (13), by means of decryption means for decrypting the encrypted result, on the basis of the secret identification code stored in the first data storage means (22).

18. A system according to claim 4, wherein when the first message verified by the first verifying means (20a) is a message received from the telecommunication terminal (15, 15a, 27, 41, 46), the second acceptance message generates an order to the telecommunication means (18, 19) to establish communication with the mobile telephone (16) for requesting the payer (13) identified by the admissible telephone number to transmit the safety parameter.

19. A system according to claim 4, wherein, when the first message verified by the first verifying means (20a) is a message received from a payer's (13) mobile telephone (16), the second acceptance message generates an order to the telecommunication means (18, 19) to transmit a message to said mobile telephone (16) requesting the payer (13) identified by the admissible telephone number to transmit the safety parameter.

20. A system according to claim 4, 18 or 19, wherein the second acceptance message further generates an order to the telecommunication means (18, 19) to transmit at least the value of the transaction and an identification of the payee, which are transmitted together with the message requesting the safety criterion.

21. A system according to claim 1, wherein the first server (20) processes a first message that furthermore contains an identification of an e-mail address, wherein the payee (27) is a supplier of software files, and wherein the confirmation message generating means (20g) furthermore generate a further confirmation message that contains a decryption code of the software file, received from the payee (27) in the first server (20), said further confirmation message being transmitted to the payer's (13) mobile telephone (16).

22. A system according to claim 1, wherein the first server (20) further comprises first detecting means (20i) for detecting a first instruction to make a purchase with advance payment and collection code generating means (20j), and wherein the confirmation message generating means (20g) also generate a complementary confirmation message that contains the collection code, said complementary confirmation message being transmitted to the payer's (13) mobile telephone (16) and to the payee's (14, 14a, 27, 29, 46) telecommunication terminal (15, 15a, 27, 29, 46).

23. A system according to claim 1, wherein the first data storage means (22) further comprise, with respect to each payee (14a, 46), third information associated with said second information and that comprises data regarding products or services corresponding to each authorized transaction, and wherein the first server (20) further comprises
second detecting means (20k) for detecting a second instruction to manage a delivery in person corresponding to an authorized transaction and received from the telecommunication terminal (15a) being a payee's (14a) mobile telephone.
delivery code generating means (201) for generating a delivery code identifying at least a product or service to be delivered, and identification message generating means (20m) identifying said product or service, and wherein the confirmation message generating means (20g) further generate an additional message that contains the delivery code, said additional message being transmitted to the payer's (13) mobile telephone (16) and to the payee's (14a) mobile telephone (15a) and the identifying message being transmitted at least to the payer's (13) mobile telephone (16) along with a request to transmit the safety parameter,
and delivery management processing means (20n) that, when the third verifying means (20c) have verified that the safety parameter satisfies the safety criterion associated to the payer's (13) mobile telephone, generate an entry in a delivery note data base (37).

24. A system according to claim 1, wherein the first data storage means (22) also comprise fourth information associated to said second information and that comprise reference codes that identify the products or services of at least one payee (14a, 46) as well as a price associated to each product or service.

25. A system according to claim 24, wherein the fourth information also comprises a first selectable telephone number comprised of one of said reference codes and an identification code of the corresponding payee (14, 46), and that constitutes the admissible identification code.

26. A system according to claim 24 or 25, wherein the fourth information also comprises the admissible identification code in the form of a telephone number for access to the payee (16,46) associated to at least a first menu comprised of the reference codes, the products or services identified respectively by each one of said reference codes and the price of said products or services.

27. A system according to claim 1, wherein the admissible identification code is an admissible access telephone number for accessing a second menu of respective admissible identification codes of a plurality of associated payees (14a, 46) and wherein the first data storage means (22) further comprise fifth information associated to said second information and that comprise reference codes that identify products or services of each one of the payees (14a, 46) as well as a price associated to each product or service.

28. A system according to claim 27, wherein the fifth information further comprises a first selectable telephone number comprised of one of said reference codes and an identification code of the corresponding payee (14, 46) and that constitutes the admissible identification code.

29. A system according to claim 27 or 28, wherein the fifth information further comprises the admissible identification code as an access telephone number of the payee (14,46) being associated to at least a first menu comprised of the reference codes, the products or services identified respectively by each of said reference codes and the price of each of said products or services.

30. A system according to claim 1, wherein the second information in the first data storage means (22) comprise
identification codes of a plurality of vending machines (29) each one of which includes a digital mobile telephone (29a) as a telecommunication terminal, identified by a mobile telephone number as an admissible identification code;
an authorization code associated to the admissible identification code of each vending machine;
an activation code for activating the vending machine (29), associated to each authorization code that activates the vending machine for receiving a request from the payer (13) identified by the admissible telephone number;
and wherein
the confirmation message generating means (20g) generate, when the first, second and third verifying means (20a, 20b, 20c) have respectively generated the first, second and third acceptance message, and transmit the confirmation message that comprises at least the code for activating the vending machine and the admissible telephone number of the payer's (13) mobile telephone (16).

31. A system according to claim 30, wherein the confirmation message generating means (20g) establish a communication between the payer's (13) mobile telephone and the vending machine (29), for a pre-established period of time during which the payer (13) can transmit, through the first server (20), a selection message to the vending machine (29); and wherein the server (20) further comprises deactivation detecting means (20o) for detecting deactivation of the vending machine (29).

32. A system according to claim 31, wherein the authorization criterion associated to the admissible telephone number of each vending machine is a direct authorization code that establishes a maximum limit selected from an economic value and a number of dispensing requests, admitted in a specific period of time in respect of requests made from the same mobile telephone, and wherein the confirmation message generating means (20g) generate the confirmation message when the direct authorization code has been detected.

33. A system according to claim 30, wherein when the confirmation message generating means (20g) in the first server (20), close the communication with the vending machine (29) after having transmitted the confirmation message, so that the payer (13) may make his selection directly by means of the selection display of the vending machine.

34. A system according to claim 30,31,32 or 33, wherein the first server (20) further comprises recording means (20p) associated to the authorization means (20d), for recording transactions recorded in each vending machine (29).

35. A system according to claim 1, wherein the first verifying means (20a) of the first server (20) further comprise complementary verifying means (20g) being associated to the selecting means (20h), for verifying if the admissible identification code that has been verified by the first verifying means (20a) in said first message received from a payer (13) identified by a first admissible telephone number and containing a transaction request that has been verified by the second verifying means (20b), corresponds to a second admissible telephone number from among the admissible telephone numbers of a digital mobile telephone (41) comprised within the first information contained in the first data storage means (22) and if the first message identifies the second admissible telephone number as identification of a payee (40), the complementary verifying means (20q) generating a fourth acceptance message when detecting that said second admissible telephone number corresponds to a payee (40), said fourth acceptance message being processable by the confirmation message generating means (20g), and wherein the rejection message generating means (20f) generate a rejection message when the fourth message has not been generated.

36. A system according to claim 35, wherein
the confirmation message generating means (20g) generate, when detecting the first, second, third and fourth acceptance message, a first confirmation message containing an identification of the payer (13), an identification of the transaction and a petition for conformity to the payee (40) identified in the first message; said petition for conformity comprising a request of transmission of the safety parameter, and transmit said confirmation message to the mobile telephone (41) of the payee (40) identified by the second admissible telephone number through the telecommunication means (18,19) selected by the selecting means;
the third verifying means (20c) furthermore verify if the safety parameter transmitted from the mobile telephone (41) in response to the petition for conformity, satisfies the safety criterion associated to the second admissible telephone number, said third verifying means (20c) generating a fifth acceptance message when said parameter satisfies said safety criterion;
the authorization means (20e) authorize the account management means (20d) when said fifth acceptance message has been generated;
the confirmation message generating means (20g) generate and transmit a second confirmation message to the mobile telephone (16) of the payer and to the mobile telephone (41) of the payee (41).

37. A system according to any of claims 1, 35 or 36, wherein, in the first server (20), each second information contained in the second data storage means (21) and referring to the type of digital mobile telephone corresponding to each admissible telephone number of each associated payer (13) and each admissible identification code of each payee (40) when the latter is a number of a digital mobile telephone, is a first identifying code being representative of the International Mobile Equipment Identifier (IMEI).

38. A system according to claim 37, wherein the first server (20) comprises first inquiry means (20r) for inquiring in at least one Visitor Location Register (VLR) comprising a first register relating telephone numbers with an IMEI code, the IMEI code corresponding to each of the admissible telephone numbers, and updating means (20s) for updating said second information in the second data storage means (21) by comparing each IMEI code inquired by the first inquiry means (20r) with each code being representative of the IMEI code associated to each admissible telephone number as contained in the second data storage means (21).

39. A system according to claim 38, wherein the first inquiry means (20r) extract the IMEI code associated to each admissible phone number, from an Equipment Identifier Register (EIR) that contains an association between each admissible telephone number and the IMEI code corresponding to each admissible telephone number, and which receive said association from each Visitor Location Register as updated by said Visitor Location Register.

40. A system according to claim 38 or 39, wherein the first inquiry means (20r) extract the IMEI code associated to each admissible telephone number, from an Unstructured Supplementary Service Data (USSD) frame into which each Visitor Location Register associated to each Mobile Switching Center (MSC) which has issued said frame, has inserted the IMEI code associated to the admissible telephone number corresponding to the user who has originated said frame.

41. A system according to claim 38, wherein the first inquiry means (20r) extract the IMEI code associated to each admissible telephone number, through an interface between the Visitor Location Register and said inquiry means (20r).

42. A system according to claim 37, wherein the first server (20) comprises
second inquiry means (20t) for inquiring the IMEI code corresponding to each admissible telephone number, in Call Data Registers (CDR) of a data bank of a mobile telephony network operator, that contain a relation of each telephone number which, on the grounds of a call, has originated a Call Data Register with an IMEI code of the terminal from which said call originated,
second updating means (20u) for updating said second information in the second data storage means (21) on he basis of a comparison of each IMEI code inquired by the second inquiry means (20t) with each code being representative of the IMEI code associated to each admissible telephone number, contained in the second data storage means (21).

43. A system according to claim 37, wherein the second information further comprises at least one datum being indicative of a communication capacity selected from a capacity of managing sessions according to Wireless Application Protocols (WAP), a capacity of managing sessions of Unstructured Supplementary Service Data (USSD), and combinations thereof, of each digital mobile telephone identified by an IMEI code and associated to an admissible telephone number.

44. A system according to claim 37, wherein the first server (20) comprises
third inquiry means (20v) for inquiring in a data bank of a mobile telephony network operator, registers that each Mobile Switching Center (MSC) transfers immediately each time a USSD frame or a voice call is addressed to a specific telephone number, said registers containing a relation of each telephone number from which a call was made or originated the USSD frame with an IMEI code of the terminal from which said call or frame originated, in respect of the IMEI codes corresponding to each admissible telephone number, and
third updating means (20w) for updating said second information in said second data storage means (21) on the basis of a comparison of each inquired IMEI code inquired by the third inquiry means (20v) with each code being representative of the IMEI code associated to each admissible telephone number contained in the second data storage means.

45. A process for processing payments and transactions between payers (13) and payees (27,29,14,14a,13a,40,46), comprising
- selectively receiving, through telecommunication means (18,19,28,47), in a payment and transaction center (17), a first message comprising the number of a mobile telephone (16) of a payer (13) or an identification code of a payee (27,29,14,14a,13a,40,46), and, furthermore,
- receiving the amount of a purchase or of a code identifying a product or service, in the payment ad transaction center (17),
- verifying if the first message originates from a payer (13) identified by an admissible telephone number or an admissible identification code of a payee (27,29,14,14a,13a,40,46);
- verifying if conditions of a transaction requested in the first message, satisfy transaction criteria stored in first data storing means (22);
- verifying the type of digital mobile telephone associated to the admissible telephone number, in second data storage means (21), and selecting one telecommunications equipment (18,19) for communicating with the digital mobile telephone (16) identified by the admissible telephone number, through a telecommunications service being compatible with the type of digital mobile telephone (16) identified by the admissible telephone number;
- checking "on line", in the first data storage means (22), if the payer (13) has a disposable balance in a previously created electronic purse in said transaction and payment center (17);
- requesting the payer (13) identified in the first message, when the transaction condition is satisfied and there is a sufficient disposable balance for authorizing the transaction, to introduce into the mobile telephone (16) identified in the first message, and to transmit, a safety parameter;
- verifying in the first data storage means (22), if the safety parameter introduced into and transmitted by, the mobile telephone (16) of the payer, satisfies a safety criterion univocally assigned to said mobile telephone (16);
- authorizing and carrying out the transaction as requested when the safety parameter satisfies the safety criterion; and
- sending a confirmation that the transaction has been carried out, to the mobile telephone (16) of the payer and to the payee (27,29,14,14a,13a,40,46).

## Patentansprüche

1. System zur Verarbeitung von Bezahlungen und Transaktionen zwischen Zahlern (13) und Zahlungsempfängern (27, 29, 14, 14a, 13a, 46), die mit dem System verbunden sind, die wenigstens eine Kommunikation mittels eines digitalen mobilen Telefons benutzen, wobei das System umfasst:
- einen ersten Server (20), der mit Telekommunikationeinrichtungen (18, 19, 28, 47) mit ersten Datenspeichereinrichtungen (22) verbunden ist und Kontomanagementeinrichtungen (20e) enthält, die erste Daten eines Kontos von jedem verbundenen Zahler (13) und zweite Daten eines Kontos von jedem verbundenen Zahlungsempfängern (27, 29, 14, 14a, 40, 46) verarbeiten; bei dem
- die ersten Telekommunikationseinrichtungen (18, 19, 28, 47) selektiv mit dem ersten Server (20) mit einer digitalen mobilen Telefoneinheit (16), die von einer zulässigen Telefonnummer eines verbundenen Zahlers (13) identifiziert ist und mit einem Telekommunikationsterminal (15, 15a, 27, 29, 41, 46), das von einem zulässigen Identifikationscode eines verbundenen Zahlungsempfängers (27, 29, 14, 14a, 40, 46) identifiziert ist, kommunizieren; wobei die Telekommunikationseinrichtungen (18, 19, 28, 47) eine Mehrzahl von Telekommunikationsausrüstungen (18, 19) umfassen;
- die ersten Datenspeichereinrichtungen (22) erste Informationen von jedem verbundenen Zahler (13) enthalten, die ersten Informationen wenigstens die zulässige Telefonnummer, wenigstens ein vorbestimmtes Autorisierungskriterium zur Autorisierung wenigstens einer Transaktion, die eine Zahlung von einem Konto eines verbundenen Zahlers (13) erfordert und wenigstens ein Sicherheitskriterium umfassen, das eindeutig mit der Telefonnummer des verbundenen Zahlers (13) verbunden ist, als auch einige zweite Informationen von jedem verbundenen Zahlungsempfänger (27, 29, 14, 14a, 40, 46), die wenigstens den zulässigen Informationscode enthalten;
- wobei der erste Server (20) umfasst:
- erste Bestätigungseinrichtungen (20a) zur Bestätigung in den Datenspeichereinrichtungen (22), ob eine erste Mitteilung, die durch die Telekommunikationseinrichtungen (18, 19, 28, 47) empfangen wurde, eine zulässige Telefonnummer eines verbundenen Zahlers (13) und einen zulässigen Identifikationscode eines verbundenen Zahlungsempfängers (27, 29, 14, 14a, 46) enthält, wobei die ersten Bestätigungseinrichtungen (20a) eine erste Akzeptanzmitteilung erzeugen, wenn sie einen zulässigen Identifikationscode und eine zulässige Telefonnummer erkennen;
- zweite Bestätigungseinrichtungen (20b) zur Bestätigung in den Datenspeichereinrichtungen (22), ob eine Transaktionsautorisierungsanforderung, die von den Telekommunikationseinrichtungen (18, 19, 28, 27) zusätzlich zu der von den ersten Bestätigungseinrichtungen erkannten zulässigen Telefonnummer empfangen wurde, das vorbestimmte Autorisierungskriterium erfüllt, wobei die zweiten Bestätigungseinrichtungen (20b) eine zweite Akzeptanzmitteilung erzeugen, wenn die Autorisierungsanforderung das Autorisierungskriterium erfüllt;
- dritte Bestätigungseinrichtungen (20c) zur Bestätigung in den ersten Datenspeichereinrichtungen (22), ob ein Sicherheitsparameter, der von den Telekommunikationseinrichtungen (18, 19) empfangen wurde, das Sicherheitskriterium erfüllt, das mit der zulässigen Telefonnummer verbunden ist, die von den ersten Bestätigungseinrichtungen detektiert wurde, wobei die dritten Bestätigungseinrichtungen (20c) eine dritte Akzeptanzmitteilung erzeugen, wenn sie erkennen, dass ein Sicherheitsparameter das Sicherheitskriterium erfüllt, das mit der zulässigen Telefonnummer verbunden ist;
- Autorisierungseinrichtungen (20d) zur Autorisierung der Kontomanagementeinrichtungen (20e) auf der Basis einer Autorisierungsanfrage, zur Verarbeitung einer Belastung eines Kontos eines verbundenen Zahlers (13) und zur Verarbeitung eines entsprechenden Guthabens in dem Konto des verbundenen Zahlungsempfängers (27, 29, 14, 14a, 40, 46) solange wie die erste, die zweite und die dritte Akzeptanzmitteilung erzeugt wurden;
- Ablehnungsmitteilungserzeugungseinrichtungen (20f) zur Erzeugung einer Ablehnungsmitteilung, wenn wenigstens eine der Akzeptanzmitteilungen nicht erzeugt wurde, und zur Übertragung der Ablehnungsmitteilung zu den Telekommunikationseinrichtungen (18, 19, 27, 28, 40);
- Bestätigungsmitteilungserzeugungseinrichtungen (20g) zur Erzeugung wenigstens einer Bestätigungsmitteilung, wenn wenigstens eine der Akzeptanzmitteilungen erzeugt wurde und zur Übertragung der Bestätigungsmitteilung zu den Telekommunikationseinrichtungen (18, 19, 28, 47) und zur selektiven Übertragung der Bestätigungsmitteilung zu dem mobilen Telefon (16, 41), das von der zulässigen Telefonnummer in der ersten Mitteilung identifiziert wurde und zu dem Telekommunikationsterminal (15, 15a, 27, 29, 41, 46), die von dem zulässigen Identifikationscode identifiziert wurden;
- zweite Datenspeichereinrichtungen (21), die wenigstens erste Informationen bezüglich der zulässigen Telefonnummer eines jeden Zahlers (13) enthalten und wenigstens zweite Informationen bezüglich des Typs des mobilen Telefons (16,41) enthalten, das zu jeder Telefonnummer gehört;
- Auswahleinrichtungen (20h) in den zweiten Datenspeichereinrichtungen (21) zur Bestätigung, dass die zweite Information zu der digitalen mobilen Telefoneinheit (16, 41), die durch die zulässige Telefonnummer identifiziert wurde, korrespondiert, und zur Auswahl eines der Telekommunikationsgeräte (18, 19), die mit dem digitalen mobilen Telefon (16, 41) kommunizieren, das von der zulässigen Telefonnummer mittels eines Telekommunikationsservice identifiziert wurde, das mit dem Typ des digitalen mobilen Telefons (16, 41) kompatibel ist, das in der zweiten Information identifiziert wurde.

2. System nach Anspruch 1, bei dem der zulässige Identifikationscode eines jeden Zahlungsempfängers (27, 29, 14, 14a, 40, 46) aus einer Telefonnummer, einer Nummer, die zu der Telefonnummer in Verbindung steht, einem Internetcode, einem Code, der für einen Internetcode repräsentativ ist, einer E-Mailadresse und einem Code, der auf einer E-Mailadresse basiert, ausgewählt wird.

3. System nach Anspruch 1, bei dem die ersten Bestätigungseinrichtungen die zulässige Telefonnummer des Zahlers (13) von einem durch die Telekommunikationseinrichtungen (18, 19, 28, 27) empfangenen Code bestätigen, der repräsentativ für die zulässige Telefonnummer und in den ersten Datenspeichereinrichtungen (22) enthalten ist.

4. System nach Anspruch 1, bei dem die zweite Akzeptanzmitteilung einen Auftrag für die Telekommunikationseinrichtungen (18,19) erzeugt, zu dem Mobiltelefon (16) eines Zahlers (13), das durch die zulässige Telefonnummer identifiziert wurde, eine erste Bestätigungsmitteilung zu übertragen, die eine Anforderung enthält, um den Sicherheitsparameter zu übertragen, der von den dritten Bestätigungseinrichtungen (20c) gegen das Sicherheitskriterium bestätigt werden muss.

5. System nach Anspruch 4, bei dem die zweite Akzeptanzmitteilung weiterhin einen Auftrag für die Telekommunikationseinrichtungen (18, 19, 28, 47) erzeugt, um mit dem Telekommunikationsterminal (15, 15a, 27, 29, 46) zu kommunizieren, das von dem zulässigen Identifikationscode identifiziert wurde, der von den ersten Bestätigungseinrichtungen detektiert wurde, um eine zweite Bestätigungsmitteilung, die die Erzeugung der ersten Akzeptanzmitteilung bestätigt, zu übertragen.

6. System nach Anspruch 1, bei dem die dritte Akzeptanzmitteilung, die von den dritten Bestätigungseinrichtungen (20c) erzeugt wurde, einen Auftrag für die Telekommunikationseinrichtungen (18, 19, 28, 47) erzeugt, um mit dem Telekommunikationsterminal (15,15a,27,29,46) zu kommunizieren, das von dem zulässigen identifikationscode identifiziert wurde, der von den ersten Bestätigungseinrichtungen (20a) detektiert wurde, um eine dritte Bestätigungsmitteilung, die die Erzeugung der dritten Akzeptanzmitteilung bestätigt, zu übertragen.

7. System nach Anspruch 1 oder 6, bei dem die dritte Akzeptanzmitteilung, die von den dritten Bestätigungseinrichtungen (20c) erzeugt wurde, einen Auftrag für die Telekommunikationseinrichtungen (18, 19) erzeugt, mit dem Mobiltelefon (16) zu kommunizieren, das durch die zulässige Telefonnummer identifiziert wurde, die von den ersten Bestätigungseinrichtungen (20a) detektiert wurde, und eine vierte Bestätigungsmitteilung zu übertragen, die die Erzeugung der dritten Akzeptanzmitteilung bestätigt.

8. System nach den Ansprüchen 1, 6 oder 7, bei dem die dritte Akzeptanzmitteilung, die von den dritten Bestätigungseinrichtungen (20c) erzeugt wurde, eine Anweisung für die Kontomanagementeinrichtungen (20c) erzeugt, um eine Belastung in dem Konto des Zahlers (13) zu verarbeiten und das entsprechende Guthaben in dem Konto des Zahlungsempfängers (27, 29, 14, 14a, 40, 46) zu verarbeiten.

9. System nach Anspruch 1 oder 8, bei dem die Kontomanagementeinrichtungen (20e) wenigstens ein erstes Zwischenkonto jedes Zahlungsempfängers (27, 29, 14, 14a, 40, 46) steuern, welches in den ersten Datenspeichereinrichtungen (22) enthalten ist und in dem jede Gutschrift vorgenommen wird.

10. System nach Anspruch 9, bei dem die Kontomanagementeinrichtungen (20e) erste Übertragungseinrichtungen zur Übertragung des Guthabens zu einem Verwaltungs- und Managementserver (23) umfassen, der eine Datenbank (25) eines Zahlungsempfänger enthält, in der alle vorgenommenen Gutschriften zugunsten eines jeden Zahlungsempfängers (27, 29, 14, 14a, 46) gespeichert sind, wobei der Verwaltungs- und Managementserver (23) die in der Datenbank (25) enthaltenen Guthaben zu Finanzeinheiten überträgt, die finanzielle Konten von jedem Zahlungsempfänger managen.

11. System nach Anspruch 1 oder 8, bei dem die Kontomanagementeinrichtungen (20e) zweite Zwischenkonten steuern, die aus Vorzahlungskonten, aus Belastungskonten in Echtzeit und Postzahlungskonten des Zahlers (13) ausgewählt wurden.

12. System nach Anspruch 11, bei dem die Vorzahlungskonten, die von den Kontomanagementeinrichtungen (20e) gesteuert werden, eine elektronische Brieftasche umfassen, die vorher in den ersten Datenspeichereinrichtungen (22) für jeden Käufer (13) erzeugt wurde.

13. System nach Anspruch 1, bei dem die Autorisierungsanforderung Daten bezüglich des Wertes der Transaktion enthält und bei dem ein vorbestimmtes Autorisierungskriterium, das von den zweiten Bestätigungseinrichtungen (20b) bestätigt wurde, unter einem verfügbaren Guthaben, einem maximalen Kreditlimit und Kombinationen davon, die für jedes Konto eines jeden Zahlers (13) bestehen, ausgewählt wird.

14. System nach Anspruch 8, bei dem die Kontomanagementeinrichtungen (20e) zweite Übertragungseinrichtungen zur Übertragung der Belastung zu einem Verwaltungs- und Managementserver (23) enthalten, der eine Datenbank (24) der Zahler enthält, in der alle vorgenommenen Belastungen gegen jeden Zahler (13) gespeichert sind, wobei der Verwaltungs- und Managementserver (23) die Guthaben, die in der Datenbank (24) der Zahler enthalten sind, zu Finanzeinheiten überträgt, die die Finanzkonten eines jeden Zahlers managen.

15. System nach Anspruch 1, bei dem das Sicherheitskriterium, das von den dritten Bestätigungseinrichtungen (20c) bestätigt wurde, ein geheimer Identifikationscode ist, der dem Zahler (13) bekannt ist und in den ersten Datenspeichereinrichtungen (22) gespeichert ist.

16. System nach Anspruch 15, bei dem die dritten Bestätigungseinrichtungen (20c) direkt bestätigen, ob die Sicherheitsparameter den geheimen Identifikationscode enthalten.

17. System nach Anspruch 15, bei dem die dritten Bestätigungseinrichtungen (20c) bestätigen, ob der Sicherheitsparameter ein verschlüsseltes Ergebnis einer Selbstbestätigung (33) enthält, die lokal in dem mobilen Telefon (16) nach dem direkten Eintrag (6) eines sicheren Identifikationscode in das Mobiltelefon des Zahlers (13) ausgeführt wurde, und zwar mittels einer Entschlüsselungseinrichtung zur Entschlüsselung des verschlüsselten Ergebnisses auf der Basis des geheimen Identifikationscodes, der in den ersten Datenspeichereinrichtungen (22) gespeichert ist.

18. System nach Anspruch 4, bei dem, wenn die erste Mitteilung, die von den ersten Bestätigungseinrichtungen (20a) bestätigt wurde, eine Mitteilung ist, die von dem Telekommunikationsterminal (15, 15a, 27, 41, 46) empfangen wurde, die zweite Akzeptanzmitteilung einen Auftrag für die Telekommunikationseinrichtungen (18, 19) erzeugt, eine Kommunikation mit dem Mobiltelefon (16) aufzubauen, um den Zahler (13), der durch die zulässige Telefonnummer identifiziert wurde, aufzufordern, die Sicherheitsparameter zu übertragen.

19. System nach Anspruch 4, bei dem, wenn die erste Mitteilung, die von den ersten Bestätigungseinrichtungen (20a) bestätigt wurde, eine Mitteilung ist, die von dem einem Mobiltelefon des Zahlers (13) empfangen wurde, die zweite Akzeptanzmitteilung einen Auftrag für die Telekommunikationseinrichtungen (18, 19) erzeugt, eine Mitteilung zu dem Mobiltelefon (16) zu übertragen, die den Zahler (13), der von der zulässigen Telefonnummer identifiziert wurde, auffordert, die Sicherheitsparameter zu übertragen.

20. System nach den Ansprüchen 4, 18 oder 19, bei dem die zweite Akzeptanzmitteilung weiterhin einen Auftrag für die Telekommunikationseinrichtungen (18, 19) erzeugt, um wenigstens einen Wert der Transaktion und eine identifikation des Zahlers zu übertragen, die zusammen mit der Mitteilung, die das Sicherheitskriterium anfordert, übertragen werden.

21. System nach Anspruch 1, bei dem der erste Server (20) eine erste Mitteilung verarbeitet, die weiterhin eine Identifikation einer E-Mailadresse enthält, bei der der Zahlungsempfänger (27) ein Lieferant von Softwaredateien ist und bei dem die Bestätigungsmitteilungserzeugungseinrichtungen (20g) außerdem eine weitere Bestätigungsmitteilung erzeugen, die einen Entschlüsselungscode der Softwaredatei enthält, die von dem Zahlungsempfänger (27) im ersten Server (20) empfangen wurde, wobei die weitere Bestätigungsmitteilung zu dem Mobiltelefon (16) des Zahlers (13) übertragen wird.

22. System nach Anspruch 1, bei dem der erste Server (20) erste Erkennungseinrichtungen (20i) zur Erkennung einer ersten Anweisung, um einen Kauf mit Vorauszahlung vorzunehmen und Einzugscodeerzeugungseinrichtungen (20j) enthält und bei dem die Bestätigungsmitteilungserzeugungseinrichtungen (20g) auch eine komplementäre Bestätigungsmitteilung erzeugen, die den Einzugscode enthält, wobei die komplementäre Bestätigungsmitteilung zu dem Mobiltelefon (16) des Zahlers (13) und zu dem Telekommunikationsterminal (15, 15a, 27, 46) des Zahlungsempfängers (14, 14a, 27, 29, 46) übertragen wird.

23. System nach Anspruch 1, bei dem die ersten Datenspeichereinrichtungen weiter, in Bezug auf jeden Zahlungsempfänger (14a, 46), dritte Informationen umfassen, die mit den zweiten Informationen verbunden sind und die Daten bezüglich Produkten oder Dienstleistungen enthalten, die jeder autorisierten Transaktion entsprechen, und bei dem der erste Server (20) weiter umfasst:
zweite Erkennungseinrichtungen (20 k) zur Erkennung einer zweiten Anweisung zum Managen einer persönlichen Lieferung entsprechend einer autorisierten Transaktion und die von einem Telekommunikationsterminal (15a) empfangen wurde, das ein Mobiltelefon eines Zahlungsempfängers (14a) ist,
Liefercodeerzeugungseinrichtungen (201) zur Erzeugung eines Lieferungscodes, der wenigstens ein zu lieferndes Produkt oder Dienstleistung identifiziert und Identifikationsmitteilungseinrichtungen (20m), die die Produkte und Dienstleistungen identifizieren und wobei die Bestätigungsmitteilungserzeugungseinrichtungen (20g) weiter eine zusätzliche Mitteilung erzeugen, die den Liefercode enthält, wobei die zusätzliche Mitteilung zu dem Mobiltelefon (16) des Zahlers (13) und zu dem Mobiltelefon (15a) des Zahlungsempfängers (14a) übertragen wird und die identifizierende Mitteilung wenigstens zu dem Mobiltelefon des Zahlers (13) mit einer Anforderung zur Übertragung der Sicherheitsparameter übertragen wird,
und Lieferungsmanagementverarbeitungseinrichtungen (20n), die, wenn die dritten Bestätigungseinrichtungen (20c) bestätigt haben, dass die Sicherheitsparameter das Sicherheitskriterium, das mit dem Mobiltelefon des Zahlers (13) verbunden ist, erfüllen, einen Eintrag in eine Lieferscheindatenbank (37) erzeugen.

24. System nach Anspruch 1, bei dem die ersten Datenspeichereinrichtungen (22) auch eine vierte Information umfasst, die mit der zweiten Information verbunden ist und die Referenzcodes umfasst, die die Produkte oder Dienstleistungen von wenigstens einem Zahlungsempfänger (14, 14a, 46), als auch den Preis, der mit jedem Produkt oder Dienstleistung verbunden ist, identifizieren.

25. System nach Anspruch 24, bei dem die vierte Information auch eine erste auswählbare Telefonnummer umfasst, die aus einem der Referenzcodes und einem Identifikationscode des entsprechenden Zahlungsempfängers (14, 46) besteht und die den zulässigen Identifikationscode bildet.

26. System nach Anspruch 24 oder 25, bei dem die vierte Information auch den zulässigen Identifikationscode in Form einer Telefonnummer für einen Zugang zu dem Zahlungsempfänger (16, 46) umfasst, verbunden mit wenigstens einem ersten Menü, das aus den Referenzcodes, den Produkte oder Dienstleistungen, die entsprechend von jedem der Referenzcodes identifiziert wurden und dem Preis jedes der Produkte oder Dienstleistungen besteht.

27. System nach Anspruch 1, bei dem der zulässige Identifikationscode eine zulässige Zugangstelefonnummer zum Zugreifen auf ein zweites Menü eines entsprechend zulässigen Identifikationscodes von einer Mehrzahl von verbundenen Zahlungsempfängern (14a, 46) ist, und bei dem die ersten Datenspeichereinrichtungen (22) weiterhin fünfte Informationen, die mit der zweiten Information verbunden sind und die Referenzcodes, die Produkte oder Dienstleistungen von jedem der Zahlungsempfänger (14, 46) identifizieren, als auch einen mit jedem Produkt oder Dienstleistung verbundenen Preis umfassen.

28. System nach Anspruch 27, bei dem die fünfte Information weiter eine erste auswählbare Telefonnummer umfasst, die aus einem der Referenzcodes und einen Identifikationscode des entsprechenden Zahlungsempfängers (14, 46) besteht und die den zulässigen Identifikationscode bildet.

29. System nach Anspruch 27 oder 28, bei dem die fünfte Information weiterhin den zulässigen Identifikationscode als eine Zugangstelefonnummer des Zahlungsempfängers (14, 46) umfasst, die wenigstens mit einem ersten Menü verbunden ist, das aus den Referenzcodes, den Produkten oder Dienstleistungen, die entsprechend von jedem der Referenzcodes identifiziert wurden, und dem Preis von jedem der Produkte und Dienstleistungen besteht.

30. System nach Anspruch 1, bei dem die zweiten Informationen in den ersten Datenspeichereinrichtungen (22) umfassen:
Identifikationscodes einer Mehrzahl von Verkaufsmaschinen (29), von denen jede ein digitales Telefon (29a) als ein Telekommunikationsterminal umfasst, das durch eine Mobiltelefonnummer als einem zulässigen Identifikationscode identifiziert wird;
einen Autorisierungscode, der mit dem zulässigen Identifikationscode jeder Verkaufsmaschine verbunden ist;
einen Aktivierungscode zur Aktivierung der Verkaufsmaschine (29), die mit jedem Autorisierungscode verbunden ist, der die Verkaufsmaschine zum Empfang einer Anforderung eines Zahlers (13), der von der zulässigen Telefonnummer identifiziert wird, aktiviert;
und wobei
wenn die erste, die zweite und die dritte Überprüfungseinrichtung (20a, b, c) die entsprechende erste, zweite und dritte Akzeptanzmeldung erzeugt haben, die Bestätigungsmitteilungserzeugungseinrichtungen (20g) die Bestätigungsmitteilung erzeugen und übertragen, die wenigstens den Code zur Aktivierung der Verkaufsmaschine und die zulässige Telefonnummern des Mobiltelefons (16) des Zahlers (13) umfasst.

31. System nach Anspruch 30, bei dem die Bestätigungsmitteilungserzeugungseinrichtungen (20g) eine Kommunikation zwischen dem Mobiltelefon des Zahlers (13) und der Verkaufsmaschine (29) für eine vorgegebene Zeitperiode aufbauen, in der der Zahler über den ersten Server (20) eine Auswahlmitteilung zu der Verkaufsmaschine (29) übertragen kann; und bei dem der Server (20) weiter Deaktivierungserkennungseinrichtungen (20o) zur Erkennung einer Deaktivierung der Verkaufsmaschine (29) umfasst.

32. System nach Anspruch 31, bei dem das Autorisierungskriterium, das mit der zulässigen Telefonnummer jeder Verkaufsmaschine verbunden ist, ein direkter Autorisierungscode ist, der ein maximales Limit einrichtet, das aus einem ökonomischen Wert und einer Anzahl von abgegebenen Anforderungen, die in einer spezifischen Zeitperiode in Bezug auf Anforderungen, die von demselben Mobiltelefon zugeführt wurden, zugelassen werden, ausgewählt wird, und bei dem die Bestätigungsmitteilungserzeugungseinrichtungen (20g) die Bestätigungsmitteilung erzeugen, wenn der direkte Autorisierungscode detektiert wurde.

33. System nach Anspruch 30, bei dem die Bestätigungsmitteilungserzeugungseinrichtungen (20g) in dem ersten Server (20) die Kommunikation mit der Verkaufsmaschine (29) beenden, nachdem die Bestätigungsmitteilung übertragen wurde, so dass der Zahler (13) seine Auswahl direkt mittels eines Auswahldisplays der Verkaufsmaschine vornehmen kann.

34. System nach Anspruch 30, 31, 32 oder 33, bei dem der erste Server (20) weiterhin Aufnahmeeinrichtungen (20p) umfasst, die mit den Autorisierungseinrichtungen (20d) zur Aufnahme von Transaktionen, die in jeder Verkaufsmaschine (29) aufgenommen wurden, verbunden sind.

35. System nach Anspruch 1, bei dem die ersten Bestätigungseinrichtungen (20a) des ersten Servers (20) weiterhin komplementäre Bestätigungseinrichtungen (20g) umfassen, die mit den Auswahleinrichtungen (20h) verbunden sind, um zu bestätigen, ob der zulässige Identifikationscode, der von den ersten Bestätigungseinrichtungen (20a) in der ersten Mitteilung bestätigt wurde, die von dem Zahler (13), der von einer ersten zulässigen Telefonnummer identifiziert wurde, empfangen wurde, und die eine Transaktionsanforderung umfasst, die von den zweiten Bestätigungseinrichtungen (20b) bestätigt wurde, mit der zweiten zulässigen Telefonnummer unter den zulässigen Telefonnummern des digitalen Mobiltelefons (41) korrespondiert, die innerhalb der ersten Information, die in dem ersten Datenspeichereinrichtungen (22) enthalten ist, eingeschlossen ist und wenn die erste Mitteilung die zweite zulässige Telefonnummer als Identifikation eines Zahlungsempfängers (40) identifiziert, wobei die komplementären Bestätigungseinrichtungen (20q) eine vierte Akzeptanzmitteilung erzeugen, wenn erkannt wird, dass die zweite zulässige Telefonnummer mit einem Zahlungsempfänger (42) korrespondiert, die vierte Akzeptanzmitteilung von den Bestätigungsmitteilungserzeugungseinrichtungen (20g) verarbeitbar ist, und bei dem die ZurückWeisungserzeugungsmitteilungseinrichtungen (20f) eine Zurückweisungsmitteilung erzeugen, wenn die vierte Mitteilung nicht erzeugt wurde.

36. System nach Anspruch 35, bei dem die Bestätigungsmitteilungserzeugungseinrichtungen (20g) beim Detektieren der ersten, zweiten, dritten und vierten Akzeptanzmitteilung eine erste Bestätigungsmitteilung, die eine Identifikation des Zahlers enthält (13), eine Identifikation der Transaktion und eine Übereinstimmungseingabe zu dem Zahlungsempfänger (40), der in der ersten Mitteilung identifiziert wurde, erzeugen; wobei die Übereinstimmungseingabe eine Anforderung zur Übertragung der Sicherheitsparameter umfasst, und die Bestätigungsmitteilung zu dem Mobiltelefon des Zahlungsempfängers (40), der von der zweiten zulässigen Telefonnummer identifiziert wurde, über die Telekommunikationseinrichtungen (18, 19) übertragen, die von Auswahleinrichtungen ausgewählt wurden,;
die dritten Bestätigungseinrichtungen (20c) weiter bestätigen, ob die Sicherheitsparameter, die von dem Mobiltelefon auf Grund der Übereinstimmungseingabe angefordert wurden, das Sicherheitskriterium, das mit der zweiten Telefonnummer verbunden ist, erfüllen, wobei die dritten Überprüfungseinrichtungen (20c) eine fünfte Akzeptanzmitteilung erzeugen, wenn der Parameter das Sicherheitskriterium erfüllt;
die Autorisierungseinrichtungen (20g) die Kontomanagementeinrichtungen (20g) autorisieren, wenn die fünfte Akzeptanzmitteilung erzeugt wurde;
die Bestätigungsmitteilungserzeugungseinrichtungen (20g) eine zweite Bestätigungsmitteilung erzeugen und zu dem Mobiltelefon (16) des Zahlers und zu dem Mobiltelefon (41) des Zahlungsempfängers (41) übertragen.

37. System nach einem der Ansprüche 1, 35 oder 36, bei dem in einem ersten Server (20) jede zweite Information, die in den zweiten Datenspeichereinrichtungen (21) enthalten ist und sich auf den Typ von digitalen mobilen Telefonen bezieht, der zu jeder zulässigen Telefonnummer von jedem verbundenen Zahler und jedem zulässigen Identifikationscode von jedem Zahlungsempfänger (40) korrespondiert, wenn die letztere eine Nummer von einem digitalen Mobiltelefon ist, ein erster identifizierender Code ist, der für die internationale Mobilgerätekennung (IMEI) repräsentativ ist.

38. System nach Anspruch 37, bei dem der erste Server erste Anfrageeinrichtungen (20r), zur Anfrage in wenigstens einem Besucherstandortregister (VLR), das ein erstes Register bezüglich der Telefonnummern mit einem IMEI-Code umfasst, wobei der IMEI-Code zu jeder der zulässigen Telefonnummern korrespondiert, und Aktualisierungseinrichtungen (20s) zum Aktualisieren der zweiten Information in den zweiten Datenspeichereinrichtungen (21) durch Vergleichen jedes IMEI-Codes, der von den ersten Anfrageeinrichtungen (20r) angefragt wurde, mit jedem Code, der den IMEI-Code darstellt, der mit jeder zulässigen Telefonnummer verbunden ist, die in den zweiten Datenspeichereinrichtungen (21) enthalten ist, umfasst.

39. System nach Anspruch 38, bei dem die ersten Anfrageeinrichtungen (20r) den IMEI-Code, der mit jeder zulässigen Telefonnummer verbunden ist, aus einem Gerätekennungsregister (EIR) extrahieren, das eine Verbindung zwischen jeder zulässigen Telefonnummer und dem IMEI-Code, der jeder zulässigen Telefonnummer entspricht, enthält, und die Verbindung von jedem Besucherstandortregister erhalten, wenn es von dem Besucherstandortregister aktualisiert wurde.

40. System nach Anspruch 38 oder 39, bei dem die ersten Anfrageeinrichtungen (20r) den IMEI-Code, der mit jeder zulässigen Telefonnummer verbunden ist, aus einem unstrukturierten zusätzlichen Servicedatenframe (USSD) extrahieren, in den jedes Besucherstandortregister, das mit jeder Funkvermittlungsstelle (MSC) verbunden ist, die den betreffenden Frame ausgibt, den IMEI-Code eingefügt hat, der mit der zulässigen Telefonnummer des entsprechenden Benutzers, der Frame erzeugt hat, verbunden ist.

41. System nach Anspruch 38, bei dem die ersten Anfrageeinrichtungen (20r) den IMEI-Code, der mit jeder zulässigen Telefonnummer verbunden ist, durch ein Interface zwischen dem Besucherstandortregister und den Anfrageeinrichtungen (20r) extrahieren.

42. System nach Anspruch 37, bei dem der erste Server (20) umfasst:
zweite Anfrageeinrichtungen (20t) zur Anfrage des IMEI-Codes, der mit jeder zulässigen Telefonnummer in einem Anrufdatenregister (CDR) einer Datenbank eines Mobiltelefonnetzwerkbetreibers korrespondiert, die eine Beziehung von jeder Telefonnummer enthält, die auf Grund eines Anrufs ein Anrufdatenregister mit einem IMEI-Code des Terminals, von dem dieser Anruf ausging, erzeugt hat,
zweite Aktualisierungseinrichtungen (20u) zur Aktualisierung der zweiten Information in den zweiten Datenspeichereinrichtungen (21) auf der Basis eines Vergleichs von jedem IMEI-Code, der von den zweiten Anfrageneinrichtungen (20t) angefragt wurde, mit jedem Code, der einen IMEI-Code darstellt, der mit jeder zulässigen Telefonnummer verbunden ist, der in den zweiten Datenspeichereinrichtungen (21) enthalten ist.

43. System nach Anspruch 37, bei dem die zweite Information weiterhin wenigstens ein Datum umfasst, das für eine Kommunikationskapazität indikativ ist, die aus einer Kapazität von Managing-Sessions nach dem drahtlosen Anwendungsprotokoll (WAP), einer Kapazität der Managing-Sessions der unstrukturierten zusätzlichen Servicedaten (USSD) und aus Kombinationen daraus, von jedem digitalen mobilen Telefon, das von einem IMEI-Code identifiziert wurde und mit einer zulässigen Telefonnummer verbunden ist, ausgewählt ist.

44. System nach Anspruch 37, bei dem der erste Server (20) umfasst:
dritte Anfrageeinrichtungen (20v) zur Anfrage nach Eintragungen in einer Datenbank von einem Mobiltelefonnetzbetreiber, die jede mobile Schaltzentrale (MSC) unmittelbar jedes Mal überträgt, wenn ein USSD-Frame oder Sprachanruf an eine spezielle Telefonnummer adressiert wird, wobei die Einträge eine Beziehung von jeder Telefonnummer, von der ein Anruf vorgenommen wurde oder der USSD-Frame ausging, mit einem IMEI-Code, der Terminals, von dem der Anruf oder der Frame erzeugt wurde, bezüglich des IMEI-Codes, der zu jeder zulässigen Telefonnummer korrespondiert, enthalten und
dritte Aktualisierungseinrichtungen (20w) zur Aktualisierung der zweiten Information in den zweiten Datenspeichereinrichtungen (21) auf der Basis eines Vergleiches von jedem angeforderten IMEi-Code, der von den dritten Anforderungseinrichtungen (20v) angefordert wurde, mit jedem Code, der einen IMEI-Code darstellt, der mit jeder zulässigen Telefonnummer, die in den zweiten Datenspeichereinrichtungen enthalten ist, verbunden ist.

45. Verfahren zur Verarbeitung von Zahlungen und Transaktionen zwischen Zahlern (13) und Zahlungsempfängern (27, 29, 14, 14a, 13a, 40, 46), das umfasst:
- das selektive Empfangen einer erste Mitteilung über Telekommunikationseinrichtungen (18,19, 28, 47) in einem Zahlungs- und in einem Transaktionscenter (17), die eine Nummer eines Mobiltelefons (16) eines Zahlers (13) oder einen Identifikationscode eines Zahlungsempfängers (27, 29, 14, 14a, 13a, 40, 46) umfasst, und, weiterhin
- das Empfangen eines Kaufbetrags oder eines Codes, der ein Produkt oder eine Dienstleistung identifiziert, in dem Zahlungs- und Transaktionscenter (17), das Bestätigen, wenn die erste Mitteilung von einem Zahler (13) stammt, der von einer zulässigen Telefonnummer oder einem zulässigen Identifikationscode eines Zahlungsempfängers (27, 29, 14, 14a, 13a, 40, 46) identifiziert wurde;
- das Bestätigen, ob Bedingungen einer in der ersten Mitteilung angeforderten Transaktion Transaktionskriterien erfüllen, die in ersten Datenspeichereinrichtungen (22) gespeichert sind;
- das Bestätigen des Typs des digitalen Mobiltelefons, das mit der zulässigen Telefonnummer in zweiten Datenspeichereinrichtungen (21) verbunden ist, und das Auswählen einer Telekommunikationsausrüstung (18, 19) zur Kommunikation mit dem digitalen Mobiltelefon (16), das durch die zulässige Telefonnummer identifiziert wurde, durch einen Telekommunikationsservice, der mit dem Typ des digitalen Mobiltelefons (16), das durch die zulässige Telefonnummer identifiziert wurde, kompatibel ist;
- das Online-Überprüfen in den ersten Datenspeichereinrichtungen (22), ob der Zahler (13) in dem Transaktions- und Zahlungscenter (17) ein verfügbares Guthaben in einer vorher eingerichteten elektronischen Geldbörse hat;
- das Auffordern des Zahlers (13), der in der ersten Mitteilung identifiziert wurde, wenn die Transaktionsbedingungen erfüllt ist und ein ausreichendes verfügbares Guthaben zur Autorisierung der Transaktion vorhanden ist, in das Mobiltelefon (16), das in der ersten Mitteilung identifiziert wurde, einen Sicherheitsparameter einzugeben und zu übertragen;
- das Bestätigen in den ersten Datenspeichereinrichtungen, ob die Sicherheitsparameter, die in das Mobiltelefon (16) des Zahlers eingegeben und übertragen wurden, ein Sicherheitskriterium, das dem Mobiltelefon (16) eindeutig zugewiesen ist, erfüllen;
- das Autorisieren und Ausführen der angeforderten Transaktion, wenn der Sicherheitsparameter das Sicherheitskriterium erfüllt, und
- das Senden einer Bestätigung zu dem Mobiltelefon (16) des Zahlers und dem Zahlungsempfänger (17, 29, 14, 14a, 13a, 40, 60), dass die Transaktion ausgeführt wurde.

## Revendications

1. Système permettant de traiter des paiements et des transactions entre des payeurs (13) et des payés (27, 29, 14, 14a, 13a, 46) associés au système, à l'aide d'au moins une communication effectuée par l'intermédiaire de la téléphonie mobile numérique, le système comprenant :
- un premier serveur (20) interconnecté avec des moyens de télécommunications (18, 19, 28, 47) dotés de premiers moyens de stockage (22) et comportant des moyens (20e) de gestion de compte qui traitent de premières données d'un compte de chaque payeur associé (13) et des deuxièmes donnés d'un compte de chaque payé associé (27, 29, 14, 14a, 40, 46);
où :
- les premiers moyens de télécommunications (18, 19, 28, 47) font sélectivement communiquer le premier serveur (20) avec une unité téléphonique mobile numérique (16) identifiée par un numéro de téléphone admissible d'un payeur associé (13) et avec un terminal de télécommunications (15, 15a, 27, 29, 41, 46) identifié par un code d'identification admissible d'un payé associé (27, 29, 14, 14a, 40, 46) ; les moyens de télécommunications (18, 19, 28, 47) comprenant une pluralité d'équipements de télécommunications (18, 19) ;
- les premiers moyens de stockage de données (22) contiennent des premières informations relatives à chaque payeur associé (13), lesdites premières informations comprenant au moins le numéro de téléphone admissible, au moins un critère d'autorisation préétabli servant à autoriser au moins une transaction qui demande un paiement provenant du compte du payeur associé (13) et au moins un critère de sécurité associé de façon univoque au numéro de téléphone du payeur associé (13), ainsi que des deuxièmes informations relatives à chaque payé associé (27, 29, 14, 14a, 40, 46) qui comprennent au moins le code d'identification admissible ;
le premier serveur (20) comprenant :
- des premiers moyens de vérification (20a) servant à vérifier, dans les moyens de stockage de données (22), si un premier message reçu via les moyens de télécommunications (18, 19, 28, 47) contient ou nom un numéro de téléphone admissible d'un payeur associé (13) et un code d'identification admissible d'un payé associé (27, 29, 14, 14a, 40, 46), lesdits premiers moyens de vérification (20a) produisant un premier message d'acceptation lorsqu'ils détectent un code d'identification admissible et un numéro de téléphone admissible ;
- des deuxièmes moyens de vérification (20b) servant à vérifier, dans les moyens de stockage de données (22), si une demande d'autorisation de transaction reçue par l'intermédiaire des moyens de télécommunications (18, 19, 28, 47), en plus du numéro de téléphone admissible détecté par les premiers moyens de vérification, vérifie ledit critère d'autorisation préétabli, lesdits deuxièmes moyens de vérification (20b) produisant un deuxième message d'acceptation lorsque la demande d'autorisation satisfait ledit critère d'autorisation ;
- des troisièmes moyens de vérification (20c) servant à vérifier, dans les premiers moyens de stockage de données (22), si un paramètre de sécurité reçu par l'intermédiaire des moyens de télécommunications (18, 19) satisfait le critère de sécurité associé au numéro de téléphone admissible détecté par les premiers moyens de vérification, lesdits troisièmes moyens de vérification (20c) produisant un troisième message d'acceptation lorsqu'ils détectent que le paramètre de sécurité satisfait le critère de sécurité associé au numéro de téléphone admissible ;
- des moyens d'autorisation (20d) servant à autoriser les moyens de gestion de compte (20e), sur la base de la demande d'autorisation, à traiter un débit dans le compte du payeur associé (13) et à traiter un crédit correspondant dans le compte du payé associé (27, 29, 14, 14a, 40, 46) pour autant que les premier, deuxième et troisième messages d'acceptation ont été produits ;
- des moyens (20f) générateurs de message de rejet servant à produire un message de rejet lorsqu'au moins l'un des messages d'acceptation n'a pas été produit et à transmettre le message de rejet aux moyens de télécommunications (18, 19, 28, 47) ;
- des moyens (20g) générateurs de message de confirmation servant à produire au moins un message de confirmation lorsqu'au moins l'un des messages d'acceptation a été produit et à transmettre ledit message de confirmation aux moyens de communications (18, 19, 28, 47) ainsi que pour la transmission sélective du message de confirmation au téléphone mobile (16, 41) identifié par le numéro de téléphone admissible dans ledit premier message et au terminal de télécommunications (15, 15a, 27, 29, 41, 46) identifié par le code d'identification admissible ;
- des deuxièmes moyens (21) de stockage de données qui contiennent au moins des premières informations se rapportant au numéro de téléphone admissible de chaque payeur (13) et au moins des deuxièmes informations se rapportant au type de téléphone mobile numérique (16, 41) appartenant à chaque numéro de téléphone ;
- des moyens de sélection (20h) servant à vérifier, dans lesdits deuxièmes moyens de stockage de données (21), les deuxièmes informations correspondant à l'unité de téléphone mobile numérique (16, 41) identifiée par le numéro de téléphone admissible et à sélectionner celui des équipements de télécommunications (18, 19) qui communique avec un téléphone mobile numérique (16, 41) identifié par le numéro de téléphone admissible par l'intermédiaire d'un service de télécommunication qui est compatible avec le type de téléphone mobile numérique (16, 41) identifié dans les deuxièmes informations.

2. Système selon le revendication 1, où le code d'identification admissible de chaque payé (27, 29, 14, 14a, 40, 46) est sélectionné entre un numéro de téléphone, un numéro relié à un numéro de téléphone, un code d'Internet, un code représentatif d'un code d'Internet, une adresse d'e-mail, et un code basé sur une adresse d'e-mail.

3. Système selon la revendication 1, où les premiers moyens de vérification vérifient le numéro de téléphone admissible du payeur (13) à partir d'un code reçu par l'intermédiaire des moyens de télécommunications (18, 19, 28, 47), représentatif dudit numéro de téléphone admissible et contenu dans les premiers moyens de stockage de données (22).

4. Système selon la revendication 1, où le deuxième message d'acceptation produit un ordre à destination des moyens de télécommunications (18, 19), qui est de transmettre, au téléphone mobile (16) d'un payeur (13) identifié par le numéro de téléphone admissible, un premier message de confirmation qui contient la demande de transmettre le paramètre de sécurité qui doit être vérifié par les troisièmes moyens de vérification (20c) par rapport au critère de sécurité.

5. Système selon la revendication 4, où le deuxième message d'acceptation produit en outre un ordre à destination des moyens de télécommunications (18, 19, 28, 47), qui est de communiquer avec le terminal de télécommunications (15, 15a, 27, 29, 46) identifié par le code d'identification admissible qui est détecté par les premiers moyens de vérification (20a) afin de transmettre un deuxième message de confirmation, qui confirme la production du premier message d'acceptation.

6. Système selon la revendication 1, où le troisième message d'acceptation produit par le troisième moyen de vérification (20c) produit un ordre à destination des moyens de télécommunications (18, 19, 28, 47), qui est de communiquer avec le terminal de télécommunication (15, 15a, 27, 29, 46) identifié par le code d'identification admissible qui est détecté par les premiers moyens de vérification (20a) afin de transmettre un troisième message de confirmation, qui confirme la production du troisième message d'acceptation.

7. Système selon la revendication 1 ou 6, où le troisième message d'acceptation produit par les troisièmes moyens de vérification (20c) produit un ordre à destination des moyens de télécommunications (18, 19), qui est de communiquer avec le téléphone mobile (16) identifié par le numéro de téléphone admissible détecté par les premiers moyens de vérification (20a), et de transmettre un quatrième message de confirmation qui confirme la production du troisième message d'acceptation.

8. Système selon la revendication 1, 6 ou 7, où le troisième message d'acceptation produit par les troisièmes moyens de vérification (20c) produit une instruction à destination des moyens (20e) de gestion de compte, qui est de traiter le débit du compte du payeur (13) et de traiter le crédit correspondant du compte du payé (27, 29, 14, 14a, 40, 46).

9. Système selon la revendication 1 ou 8, où les moyens (20e) de gestion de compte commandent au moins un premier compte intermédiaire de chaque payé (27, 29, 14, 14a, 40, 46) contenu dans les premiers moyens de stockage de données (22) et dans lequel chaque crédit est fait.

10. Système selon la revendication 9, où les moyens (20e) de gestion de compte comprennent des premiers moyens de transmission servant à transmettre ledit crédit à un serveur (23) d'administration et de gestion qui comprend une banque de données (25) de payés dans laquelle tous les crédits faits en faveur de chaque payé (27, 29, 14, 14a, 46) sont stockés, le serveur d'administration et de gestion (23) transférant les crédits contenus dans la banque de données (25) aux entités financières qui gèrent les comptes financiers de chaque payé.

11. Système selon la revendication 1 ou 8, où les moyens (20e) de gestion de compte commandent des deuxièmes comptes intermédiaires sélectionnés à partir de comptes de pré-paiement, de comptes de débit en temps réel et de comptes de post-paiement, des payeurs (13).

12. Système selon la revendication (11), où les comptes de pré-paiement commandés par les moyens (20e) de gestion de compte comprennent un porte-monnaie électronique préalablement créé dans les premiers moyens de stockage de données (22) pour chaque acheteur (13).

13. Système selon la revendication 1, où la demande d'autorisation comprend des données se rapportant à la valeur de la transaction, et où le critère d'autorisation préétabli qui est vérifié par les deuxièmes moyens de vérification (20b) est sélectionné entre l'équilibre disponible, la limite de crédit maximale et des combinaisons de ces grandeurs, qui sont établies pour le compte de chaque payeur (13).

14. Système selon la revendication (8), où les moyens de gestion de compte (20e) comprennent des deuxièmes moyens de transmission servant à transmettre ledit débit à un serveur (23) d'administration et de gestion qui comprend une banque de données (24) de payeurs, où tous les débits faits à l'égard de chaque payeur (13) sont stockés, le serveur d'administration et de gestion (23) transférant les crédits contenus dans la banque de données (24) des payeurs aux entités financières qui gèrent les comptes financiers de chaque payeur.

15. Système selon la revendication 1, où le critère de sécurité vérifié par les troisièmes moyens de vérification (20c) est un code d'identification secret qui est connu du payeur (13) et est stocké dans les premiers moyens de stockage de données (22).

16. Système selon la revendication 15, où les troisièmes moyens de vérification (20c) vérifient directement si le paramètre de sécurité est ou non contenu dans le code d'identification secret.

17. Système selon la revendication 15, où les troisièmes moyens de vérification (20c) vérifient si le paramètre de sécurité contient ou non le résultat crypté d'une autovérification (33) effectuée localement dans le téléphone mobile (16) après l'introduction directe (6) du code d'identification secret dans le téléphone mobile par le payeur (13), par l'intermédiaire de moyens de décryptage servant à décrypter le résultat crypté, sur la base du code d'identification secret stocké dans les premiers moyens de stockage de données (22).

18. Système selon la revendication 4, où lorsque le premier message vérifié par les premiers moyens de vérification (20a) est un message reçu de la part du terminal de télécommunications (15, 15a, 27, 41, 46), le deuxième message d'acceptation produit un ordre à destination des moyens de télécommunications (18, 19), qui est d'établir une communication avec le téléphone mobile (16) pour demander au payeur (13) identifié par le numéro de téléphone admissible de transmettre le paramètre de sécurité.

19. Système selon la revendication 4, où, lorsque le premier message vérifié par les premiers moyens de vérification (20a) est un message reçu de la part du téléphone mobile (16) du payeur (13), le deuxième message d'acceptation produit un ordre à destination des moyens de télécommunications (18, 19), qui est de transmettre un message audit téléphone mobile (16) demandant au payeur (13) identifié par le numéro de téléphone admissible de transmettre le paramètre de sécurité.

20. Système selon la revendication 4, 18 ou 19, où le deuxième message d'acceptation produit en outre un ordre à destination des moyens de télécommunications (18, 19), qui est de transmettre au moins la valeur de la transaction et une identification du payé, qui sont transmis en même temps que le message demandant le critère de sécurité.

21. Système selon la revendication 1, où le premier serveur (20) traite un premier message qui contient en outre une identification de l'adresse d'e-mail, où le payé (27) est un fournisseur de fichiers logiciels, et où les moyens (20g) générateurs de message de confirmation produisent en outre un autre message de confirmation qui contient un code de décryptage du fichier logiciel, reçu de la part du payé (27) dans le premier serveur (20), ledit autre message de confirmation étant transmis au téléphone mobile (16) du payeur (13).

22. Système selon la revendication 1, où le premier serveur (20) comprend en outre des premiers moyens de détection (20i) servant à détecter une première instruction demandant de faire un achat avec paiement d'avance et un moyen (20j) générateur de code de recueil, et où les moyens (20g) générateurs de message de confirmation produisent également un message de confirmation complémentaire qui contient le code de recueil, ledit message de confirmation complémentaire étant transmis au téléphone mobile (16) du payeur (13) et au terminal de télécommunications (15, 15a, 27, 29, 46) du payé (14, 14a, 27, 29, 46).

23. Système selon la revendication 1, où les premiers moyens de stockage de données (22) comprennent en outre, relativement à chaque payé (14a, 46), des troisièmes informations qui sont associées auxdites deuxièmes informations et qui comprennent des données se rapportant à des produits ou des services correspondant à chaque transaction autorisée, et où le premier serveur (20) comprend en outre :
des deuxièmes moyens de détection (20k) servant à détecter une deuxième instruction demandant la remise en main propre qui correspond à une transaction autorisée et est reçue de la part du terminal de télécommunications (15a) qui est le téléphone mobile d'un payé (14a),
des moyens (201) générateurs de code de remise servant à produire un code de remise qui identifie au moins un produit ou un service à délivrer, et un moyen (20m) générateur de message d'identification qui identifie ledit produit ou ledit service, et où le moyen (20g) générateur de message de confirmation produit en outre un message supplémentaire qui contient le code de remise, ledit message supplémentaire étant transmis au téléphone mobile (16) du payeur (13) et au téléphone mobile (15a) du payé (14a), et le message d'identification étant transmis au moins au téléphone mobile (16) du payeur (13) en même temps qu'une demande de transmettre le paramètre de sécurité, et
des moyens (20n) de traitement de gestion de remise qui, lorsque les troisièmes moyens de vérification (20c) ont vérifié que le paramètre de sécurité satisfaisait le critère de sécurité associé au téléphone mobile du payeur (13), produisent une entrée dans une base de données (37) de notes de remise.

24. Système selon la revendication 1, où les premiers moyens de stockage de données (22) comprennent également des quatrièmes informations associées auxdites deuxièmes informations et qui comprennent des codes de référence qui identifient les produits ou les services d'au moins un payé (14a, 46) ainsi que le prix associé à chaque produit ou service.

25. Système selon la revendication 24, où les quatrièmes informations comprennent également un premier numéro de téléphone sélectionnable constitué de l'un desdits codes de référence et un code d'identification du payé correspondant (14, 46), et qui constitue le code d'identification admissible.

26. Système selon la revendication 24 ou 25, où les quatrièmes informations comprennent également le code d'identification admissible sous la forme d'un numéro de téléphone donnant accès au payé (16, 46) associé à au moins un premier menu constitué des codes de référence, les produits ou les services respectivement identifiés par chacun desdits codes de référence et le prix desdits produits ou services.

27. Système selon la revendication 1, où le code d'identification admissible est un numéro de téléphone d'accès admissible servant à donner accès à un deuxième menu de codes d'identification admissibles respectifs d'une pluralité de payés associés (14a, 46) et où les premiers moyens de stockage de données (22) comprennent en outre des cinquièmes informations associées auxdites deuxièmes informations et qui comprennent des codes de référence qui identifient des produits ou des services de chacun des payés (14a, 46) ainsi qu'un prix associé à chaque produit ou service.

28. Système selon la revendication 27, où les cinquièmes informations comprennent en outre un premier numéro de téléphone sélectionnable constitué de l'un desdits codes de référence et un code d'identification du payé correspondant (14, 46) et qui constitue le code d'identification admissible.

29. Système selon la revendication 27 ou 28, où les cinquièmes informations comprennent en outre le code d'identification admissible comme numéro de téléphone d'accès du payé (14, 46) qui est associé à au moins un premier menu constitué des codes de référence, les produits ou services respectivement identifiés par chacun desdits codes de référence et le prix de chacun desdits produits ou services.

30. Système selon la revendication 1, où les deuxièmes informations contenues dans les premiers moyens de stockage de données (22) comprennent :
des codes d'identification d'une pluralité de distributeurs automatiques (29) comportant chacun un téléphone mobile numérique (29a) comme terminal de télécommunications identifié par un numéro de téléphone mobile comme code d'identification admissible ;
un code d'autorisation associé au code d'identification admissible de chaque distributeur automatique ;
un code d'activation servant à activer le distributeur automatique (29), associé à chaque code d'autorisation qui active le distributeur automatique afin de recevoir une demande de la part du payeur (13) identifié par le numéro de téléphone admissible ;
et où :
les moyens (20g) générateurs de message de confirmation produisent, lorsque les premiers, deuxièmes et troisièmes moyens de vérification (20a, 20b, 20c) ont respectivement produit les premier, deuxième et troisième messages d'acceptation, et transmettent le message de confirmation qui comprend au moins le code servant à activer le distributeur automatique et le numéro de téléphone admissible du téléphone mobile (16) du payeur (13).

31. Système selon la revendication (30), où les moyens (20g) de production de message de confirmation établissent une communication entre le téléphone mobile du payeur (13) et la machine distributrice (29), pendant une durée préétablie durant laquelle le payeur (13) peut émettre, via le premier serveur (20), un message de sélection à destination du distributeur automatique (29) ; et où le serveur (20) comprend en outre des moyens (20o) de détection de désactivation servant à détecter une désactivation du distributeur automatique (29).

32. Système selon la revendication 31, où le critère d'autorisation associé au numéro de téléphone admissible de chaque distributeur automatique est un code d'autorisation directe qui établit une limite maximale sélectionnée à partir d'une valeur économique et un certain nombre de demandes de distributions, admises dans une durée particulière relativement à des demandes faites en provenance du même téléphone mobile, et où les moyens (20g) générateurs de message de confirmation produisent le message de confirmation lorsque le code d'autorisation directe a été détecté.

33. Système selon la revendication 30, où les moyens (20g) générateurs de message de confirmation se trouvant dans le premier serveur (20), ferment la communication avec le distributeur automatique (29) après avoir transmis le message de confirmation, de sorte que le payeur (13) peut faire sa sélection directement par l'intermédiaire de l'afficheur de sélection du distributeur automatique.

34. Système selon la revendication 30, 31, 32 ou 33, où le premier serveur (20) comprend en outre des moyens d'enregistrement (20p) associés aux moyens d'autorisation (20d), afin d'enregistrer des transactions enregistrées dans chaque distributeur automatique (29).

35. Système selon la revendication 1, où les premiers moyens de vérification (20a) du premier serveur (20) comprennent en outre des moyens de vérification complémentaires (20g) qui sont associés aux moyens de sélection (20h), afin de vérifier si le code d'identification admissible qui a été vérifié par les premiers moyens de vérification (20a) se trouvant dans ledit premier message reçu de la part d'un payeur (13) identifié par un premier numéro de téléphone admissible et contenant une demande de transaction qui a été vérifiée par les deuxièmes moyens de vérification (20b), correspond à un deuxième numéro de téléphone admissible pris parmi les numéros de téléphone admissibles d'un téléphone mobile numérique (41) compris à l'intérieur des premières informations contenues dans les premiers moyens de stockage de données (22) et, si le premier message identifie le deuxième numéro de téléphone admissible au titre de l'identification d'un payé (40), les moyens (20q) de vérification complémentaires produisant un quatrième message d'acceptation lorsqu'il est détecté que ledit deuxième numéro de téléphone admissible correspond à un payé (40), ledit quatrième message d'acceptation pouvant être traité par les moyens générateurs de message de confirmation (20g), et où les moyens (20f) générateurs de message de rejet produisent un message de rejet lorsque le quatrième message n'a pas été produit.

36. Système selon la revendication 35, où :
les moyens (20g) générateurs de message de confirmation produisent, lors de la détection des premier, deuxième, troisième et quatrième messages d'acceptation, un premier message de confirmation contenant une identification du payeur (13), une identification de la transaction et une requête en conformité à destination du payé (40) identifié dans le premier message ; ladite requête en conformité comprenant une demande de transmission des paramètres de sécurité, et transmettent ledit message de confirmation au téléphone mobile (41) du payé (40) identifié par le deuxième numéro de téléphone admissible par l'intermédiaire des moyens de télécommunications (18, 19) sélectionnés par les moyens de sélection ;
les troisièmes moyens de vérification (20c) vérifient en outre si le paramètre de sécurité transmis depuis le téléphone mobile (41) en réponse à la requête en conformité, satisfait le critère de sécurité associé au deuxième numéro de téléphone admissible, les troisièmes moyens de vérifications (20c) produisant un cinquième message d'acceptation lorsque ledit paramètre satisfait ledit critère de sécurité ;
les moyens d'autorisation (20e) autorisent les moyens (20d) de gestion de compte lorsque ledit cinquième message d'acceptation a été produit ;
les moyens (20g) générateurs de message de confirmation produisent et émettent un deuxième message de confirmation à destination du téléphone mobile (16) du payeur et du téléphone mobile (41) du payé (41).

37. Système selon l'une quelconque des revendications 1, 35 et 36, où, dans le premier serveur (20), chaque deuxième information contenue dans les deuxièmes moyens de stockage de données (21) et se rapportant au type de téléphone mobile numérique correspondant à chaque numéro de téléphone admissible du payeur associé (30) et chaque code d'identification admissible du payé (40) respectif lorsque ce dernier est le numéro d'un téléphone mobile numérique, est un premier code d'identification qui est représentatif de l'IMEI, à savoir Identificateur d'Equipement Mobile International.

38. Système selon la revendication 37, où le premier serveur (20) comprend des premiers moyens (20r) d'examen servant à examiner dans au moins un VLR, à savoir Registre de Localisation de Visiteurs comprenant un premier registre se rapportant aux numéros de téléphone ayant un code IMEI, le code IMEI correspondant à chacun des numéros de téléphone admissibles, et des moyens de mise à jour (20s) servant à mettre à jour lesdites deuxièmes informations contenues dans lesdits deuxièmes moyens de stockage de données (21) par comparaison de chaque code IMEI examiné par les premiers moyens d'investigation (20r) avec chaque code qui est représentatif du code IMEI associé à chaque numéro de téléphone admissible tel qu'il en est contenu dans les deuxièmes moyens de stockage de données (21).

39. Système selon la revendication 38, où les premiers moyens d'examen (20r) extraient le code IMEI associé à chaque numéro de téléphone admissible, à partir d'un EIR, à savoir un Registre d'Identificateurs d'Equipements, qui contient une association entre chaque numéro de téléphone admissible et le code IMEI correspondant à chaque numéro de téléphone admissible, et qui reçoivent de la part de chaque VLR ladite association telle qu'elle a été mise à jour par ledit VLR.

40. Système selon la revendication 38 ou 39, où les premiers moyens d'investigation (20r) extraient le code IMEI associé à chaque numéro de téléphone admissible, une trame USSD, à savoir une Trame de Données de Service Supplémentaires Non structurées dans laquelle chaque VLR associé à chaque MSC, à savoir Centre de Commutation Mobile, qui a délivré ladite trame, a inséré le code IMEI associé au numéro de téléphone admissible correspondant à l'utilisateur qui est à l'origine de ladite trame.

41. Système selon la revendication 38, où les premiers moyens d'examen (20r) extraient le code IMEI associé à chaque numéro de téléphone admissible, par l'intermédiaire d'une interface entre le VLR et lesdits moyens d'examen (20r).

42. Système selon la revendication 37, où le premier serveur (20) comprend :
des deuxièmes moyens d'examen (20t) servant à examiner le code IMEI correspondant à chaque numéro de téléphone admissible, dans des CDR, à savoir des Registres de Données d'Appel, d'une banque de données d'un opérateur de réseau de téléphonie mobile, qui contiennent la relation de chaque numéro de téléphone qui, sur la base d'un appel, a été à l'origine d'un Registre de Données d'Appel avec un code IMEI du terminal dont ledit appel est originaire,
des deuxièmes moyens de mise à jour (20u) servant à mettre à jour lesdites deuxièmes informations se trouvant dans lesdits deuxièmes moyens de stockage de données (21) sur la base de la comparaison de chaque code IMEI examiné par les deuxièmes moyens d'examen (20t) avec chaque code qui est représentatif du code IMEI associé à chaque numéro de téléphone admissible, contenu dans les deuxièmes moyens de stockage de données (21).

43. Système selon la revendication 37, où les deuxièmes informations comprennent en outre au moins une donnée qui est indicative d'une capacité de communication sélectionnée parmi la capacité de gérer des sessions selon les protocoles WAP (à savoir "Wireless Application Protocols"), la capacité de gérer des sessions de l'USSD (à savoir "Unstructured Supplementary Service Data"), et leurs combinaisons, pour chaque numéro de téléphone mobile numérique identifié par un code IMEI et associé à un numéro de téléphone admissible.

44. Système selon la revendication 37, où le premier serveur (20) comprend :
des troisièmes moyens d'examen (20v) servant à effectuer des examens dans une banque de données d'un opérateur de réseau de téléphonie mobile, des registres que chaque MSC transfère immédiatement à chaque fois qu'une trame USSD ou un appel vocal est adressé à un numéro de téléphone spécifique, lesdits registres contenant une relation de chaque numéro de téléphone à partir duquel un appel est fait ou tire son origine de la trame USSD avec un code IMEI du terminal à partir duquel ledit appel ou ladite trame est originaire, par rapport aux codes IMEI correspondant à chaque numéro de téléphone admissible et,
des troisièmes moyens de mise à jour (20w) servant à mettre à jour lesdites deuxièmes informations se trouvant dans lesdits deuxièmes moyens de stockage de données (21) sur la base de la comparaison de chaque code IMEI examiné par les troisièmes moyens d'investigation (20v) avec chaque code qui est représentatif du code IMEI associé à chaque numéro de téléphone admissible contenu dans les deuxièmes moyens de stockage de données.

45. Processus permettant de traiter des paiements et des transactions entre des payeurs (13) et des payés (27, 29, 14, 14a, 13a, 40, 46), comprenant les opérations suivantes :
- recevoir sélectivement, par l'intermédiaire de moyens de télécommunications (18, 19, 28, 47), dans un centre de paiement et de transaction (17), un premier message contenant le numéro d'un téléphone mobile (16) d'un payeur (13) ou un code d'identification d'un payé (27, 29, 14, 14a, 13a, 40, 46) et, de plus,
- recevoir la valeur d'un achat ou d'un code identifiant un produit ou un service, dans le centre de paiement et de transaction (17),
- vérifier si le premier message est originaire d'un payeur (13) identifié par un numéro de téléphone admissible ou un code d'identification admissible d'un payé (27, 29, 14, 14a, 13a, 40, 46) ;
- vérifier si les conditions de la transaction demandée dans le premier message satisfont des critères de transaction stockés dans des premiers moyens de stockage de données(22);
- vérifier le type de téléphone mobile numérique associé au numéro de téléphone admissible, dans des deuxièmes moyens de stockage de données (21), et sélectionner un équipement de télécommunications (18, 19) permettant de communiquer avec le téléphone mobile numérique (16) identifié par le numéro de téléphone admissible, par l'intermédiaire d'un service de télécommunications qui est compatible avec le type de téléphone mobile numérique (16) identifié par le numéro de téléphone admissible ;
- contrôler "en ligne", dans les premiers moyens de stockage de données (22), si le payeur (30) possède un équilibre à disposition dans un porte-monnaie électronique précédemment créé, dans ledit centre de transaction et de paiement (17) ;
- demander au payeur (13) identifié dans le premier message, lorsque les conditions de transaction sont satisfaites et s'il y a un équilibre à disposition suffisant pour autoriser la transaction, d'introduire dans le téléphone mobile (16) identifié dans le premier message un paramètre de sécurité et de le transmettre ;
- vérifier, dans les premiers moyens de stockage de données (22), si le paramètre de sécurité introduit dans le téléphone mobile (16) du payeur et transmis par ce téléphone satisfait un critère de sécurité affecté d'une manière univoque audit téléphone mobile (16) ;
- autoriser et effectuer la transaction telle que demandée lorsque le paramètre de sécurité satisfait le critère de sécurité ;et
- envoyer une confirmation que la transaction a été effectuée aux téléphones mobiles (16) du payeur et du payé (27, 29, 14, 14a, 13a, 40, 46).
